(19) Europäisches Patentamt
European Patent Office
Office européen des brevets

(11) **EP 2 510 338 B1**

(12) **FASCICULE DE BREVET EUROPEEN**

(45) Date de publication et mention de la délivrance du brevet:
**29.10.2014 Bulletin 2014/44**

(51) Int Cl.:
***G01N 23/083*** (2006.01)   ***G01N 23/087*** (2006.01)

(21) Numéro de dépôt: **10776976.2**

(22) Date de dépôt: **02.11.2010**

(86) Numéro de dépôt international:
**PCT/EP2010/066652**

(87) Numéro de publication internationale:
**WO 2011/069748 (16.06.2011 Gazette 2011/24)**

(54) **PROCEDE ET DISPOSITIF DE RECONNAISSANCE D'UN MATERIAU A L'AIDE DE SA FONCTION DE TRANSMISSION**

VERFAHREN UND VORRICHTUNG ZUR ERKENNUNG EINES MATERIALS MITTELS DER ÜBERTRAGUNGSFUNKTION

METHOD AND DEVICE FOR RECOGNIZING A MATERIAL USING THE TRANSMISSION FUNCTION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2009 FR 0958804**

(43) Date de publication de la demande:
**17.10.2012 Bulletin 2012/42**

(73) Titulaire: **Commissariat à l'Énergie Atomique et aux Énergies Alternatives
75015 Paris (FR)**

(72) Inventeurs:
• **OUVRIER-BUFFET, Patrice**
  **F-74410 Saint-Jorioz (FR)**
• **BELDJOUDI, Guillaume**
  **F-69520 Grigny (FR)**
• **REBUFFEL, Véronique**
  **F-38700 Corenc (FR)**
• **RINKEL, Jean**
  **38600 Fontaine (FR)**

(74) Mandataire: **Ilgart, Jean-Christophe et al
BREVALEX
95, rue d'Amsterdam
75378 Paris Cedex 8 (FR)**

(56) Documents cités:
**WO-A1-2009/024818     WO-A2-2008/142446
US-A- 6 018 562**

• **RYZHIKOV V D ET AL: "A spectrometric approach in radiography for detection of materials by their effective atomic number", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL LNKD- DOI:10.1016/J.NIMA. 2009.02.006, vol. 603, no. 3, 13 février 2009 (2009-02-13), pages 349-354, XP026097538, ISSN: 0168-9002 [extrait le 2009-02-13]**
• **NAYDENOV S V ET AL: "Direct reconstruction of the effective atomic number of materials by the method of multi-energy radiography", NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL LNKD- DOI:10.1016/J.NIMB. 2003.09.020, vol. 215, no. 3-4, 1 février 2004 (2004-02-01), pages 552-560, XP004486776, ISSN: 0168-583X**
• **LEHMANN L A ET AL: "Generalized image combinations in dual KVP digital radiography", MEDICAL PHYSICS, AIP, MELVILLE, NY, US, vol. 8, no. 5, 1 September 1981 (1981-09-01), pages 659-667, XP002631532, ISSN: 0094-2405**

- XIAOLAN WANG ET AL: "A digital line-camera for energy resolved X-ray photon counting", 2009 IEEE NUCLEAR SCIENCE SYMPOSIUM AND MEDICAL IMAGING CONFERENCE (NSS/MIC 2009), ORLANDO, FL, USA, IEEE, PISCATAWAY, NJ, USA, 24 October 2009 (2009-10-24), pages 3453-3457, XP031826408, DOI: 10.1109/NSSMIC. 2009.5401785 ISBN: 978-1-4244-3961-4

- E. C. FREY ; X. WANG ; Y. DU ; K. TAGUCHI ; J. XU ; B. M. W. TSUI: "Investigation of the use of photon counting x-ray detectors with energy discrimination capability for material decomposition in micro-computed tomography", PROC. SPIE 6510, MEDICAL IMAGING 2007: PHYSICS OF MEDICAL IMAGING, 65100A, 16 March 2007 (2007-03-16), XP008161520, DOI: 10.1117/12.711711

**Description**

**DOMAINE TECHNIQUE ET ART ANTERIEUR**

L'invention concerne le domaine des techniques d'analyse de matériaux, par exemple pour identifier un produit tel qu'un explosif, dans un bagage, à partir de l'analyse de la fonction de transmission du rayonnement X de ce bagage.

Elle a donc des applications dans les systèmes mis en oeuvre dans les aéroports pour identifier des matières explosives dans les bagages.

Mais d'autres applications peuvent concerner des domaines où on cherche à déterminer, de manière rapide, la nature d'un matériau en utilisant un rayonnement.

Selon les techniques connues d'inspection de bagages, une source de rayonnement X, généralement un tube à rayons X, produit un rayonnement traversant le bagage.

Selon une première technique, on réalise plusieurs vues du bagage, à l'aide d'un scanner ou d'un autre dispositif, afin de compter le nombre de photons qui traversent l'objet par des chemins différents.

Selon cette méthode on mesure les variations de la transmission en fonction de l'épaisseur traversée par les rayons X, et, par des algorithmes sophistiqués, on remonte à la nature de l'objet observé, voir US 6,018,562.

Une deuxième technique consiste à utiliser deux sources de rayons X monochromatiques ou deux tubes à rayons X réglés sur deux tensions d'accélération différentes. On commute soit l'une soit l'autre de ces deux sources.

Ces deux faisceaux permettent, à l'aide d'un système de discrimination et de comptage, d'obtenir une information grossière sur un canal basse énergie et un canal haute énergie.

Selon encore une troisième technique, le rayonnement X est détecté par un détecteur, qui a la forme d'une barrette (assemblage linéaire) de détecteurs.

Les détecteurs sont le plus souvent des détecteurs scintillateurs, par exemple des cristaux de CsI(Tl), couplés à des photomultiplicateurs.

Les systèmes actuels, dits systèmes Sandwich, sont constitués de 2 couches de détecteurs superposés l'un sur l'autre (double couche), et séparés d'une épaisseur d'un matériau intercalaire, formant avec le premier détecteur, un filtre, atténuant les photons de plus faible énergie.

Ainsi, la première couche, généralement très fine, est davantage sensible aux photons de faible énergie, tandis que la seconde couche, plus épaisse, détecte un spectre durci, les photons de plus faible énergie ayant été atténués par le matériau intercalaire.

Bien que le second détecteur délivre une information représentative de la haute énergie (H.E.), tandis que le premier délivre un signal représentatif de la basse énergie (B.E.), on constate une très faible séparabilité en énergie, du fait de recouvrement des signaux H.E. et B.E. En outre, ce système ne peut être généralisé à plus de deux énergies (HE, BE).

Selon l'art antérieur, on ne mesure finalement que deux grandeurs, l'une correspondant à un taux de comptage à basse énergie et l'autre correspondant à un taux de comptage à haute énergie. Il s'en suit un manque de précision. De plus, pour un système donné, les plages énergétiques correspondant aux deux grandeurs ne sont pas paramétrables.

Un autre inconvénient de cette technique est le recours à deux détecteurs pour réaliser une mesure. Ainsi, si l'on soit effectuer N mesures, par exemple selon une ligne, on doit utiliser 2N détecteurs.

**EXPOSÉ DE L'INVENTION**

Les inventeurs ont donc choisi une méthode de mesure différente, basée sur l'utilisation possible d'un seul détecteur, et basée non pas sur des techniques de comptage, mais sur une technique de spectrométrie, c'est-à-dire l'utilisation d'une distribution en amplitude des impulsions mesurées par le détecteur.

Mais le recours à une telle solution se heurte à des difficultés techniques. En effet, les techniques de spectrométrie connues, ne sont que très difficilement compatibles avec les exigences actuelles pour les inspections de bagages : on a besoin d'une méthode rapide, mais également précise et compatible avec la sécurité. En particulier, la vitesse de défilement des bagages impose de faire une mesure de l'énergie des photons transmis, sur un temps court (quelques ms) avec un fort flux de photons incident élevé (débit de fluence compris entre quelques Mphotons/mm$^2$/s à quelques dizaines de Mphotons/mm$^2$/s) pour garder une statistique suffisante.

Selon les dispositifs de spectrométrie de l'art antérieur, il est impossible de réaliser des spectres exploitables en soumettant un détecteur à des rayonnements photoniques incidents aussi intenses, , et dans un temps aussi court, notamment du fait de problèmes liés à l'empilement de photons.

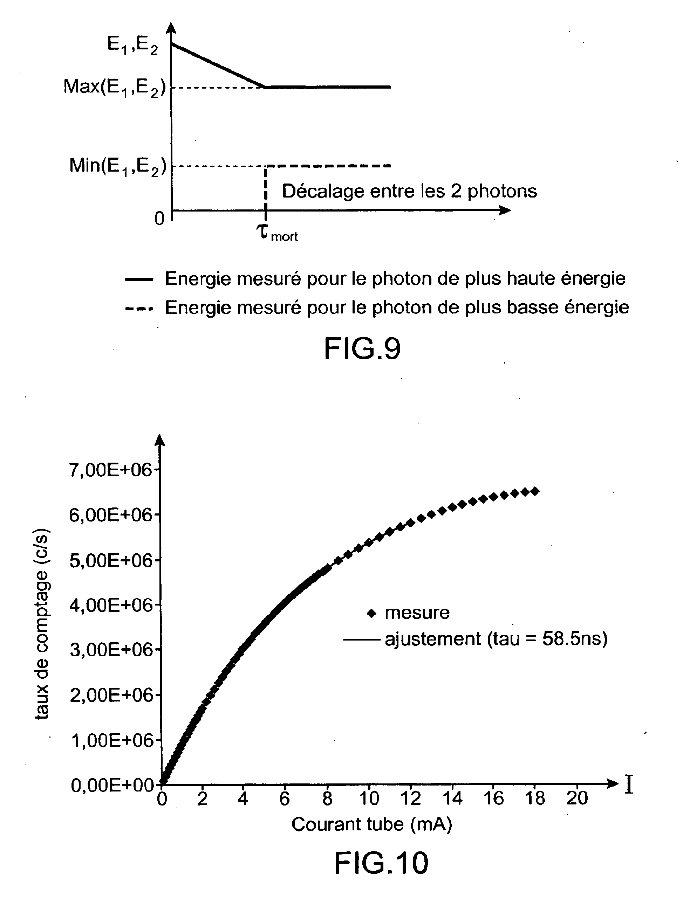

La figure 9 est une mesure de spectre à deux flux différents, qui illustre les problèmes posés par le phénomène d'empilement. La courbe I correspond à un flux de $6,082 \times 10^6$ photons/s/pixel tandis que la courbe II correspond à un flux de $4,752 \times 10^4$ photons/s/pixel, la surface de chaque pixel étant de 800 $\mu$m x 800 $\mu$m avec une profondeur de 3mm.

Lorsque le flux augmente (nombre de photons X incidents par unité de temps par pixel), le signal fourni se dégrade en raison du phénomène d'empilement: si deux événements sont détectés avec un laps de temps les séparant trop court, le système n'est pas capable de les discriminer et fournit un signal erroné dépendant des énergies des deux photons et de l'intervalle de temps les séparant.

En figure 9 on constate donc sur les courbes I et II deux effets qui résultent du phénomène d'empilement :

- une baisse du taux de comptage quand le flux augmente, visible aux basses énergies (zone A sur la figure 9),
- une augmentation du nombre d'évènements comptés aux hautes énergies avec le flux en raison du spectre d'empilements (zone B sur la figure 9).

Il existe différentes classes de méthode permettant de traiter le phénomène d'empilement.

On connaît des méthodes empiriques : une approche est basée sur le calibrage du phénomène d'empilement avec des sources radioactives d'activité connue.

L'information issue du calibrage est ensuite utilisée sur le signal inconnu, comme décrit dans American National Standard for Calibration and Use of Germanium Spectrometers for the Measurement of Gamma-Ray Emission Rates of Radionuclides, American National Standards Institute (ANSI) N42.14-1999, p.7, 13, 15, 86, 89, 134.

Le principal inconvénient de cette approche est la nécessité de disposer de sources γ à forte activité radioactive, ce qui rend complexe le procédé de calibrage et pose notamment des problèmes de radioprotection.

On connaît aussi des méthodes analogiques, qui optimisent l'électronique pour minimiser les empilements. En particulier l'utilisation de circuits inhibiteurs permet de ne pas prendre en compte les nouvelles particules absorbées avant la fin du traitement de la particule courante. Ce type d'approche permet d'obtenir un système non-paralysable, l'inconvénient étant que le temps mort résultant du traitement diminue les performances d'un tel système en taux de comptage.

Il existe aussi des méthodes numériques, dites de correction du temps actif, qui permettent de rejeter une partie des empilements, puis analyse de la forme du signal.

Il y a enfin des méthodes de correction a posteriori, notamment celle du document FR 2 870 603, ou décrite dans Trigano, T., Traitement du signal spectrométrique : Etude du désempilement de spectre en énergie pour la spectrométrie gamma. 2006. Cette méthode est basée sur la connaissance de la durée et de l'énergie de chaque impulsion.

La présente invention cherche notamment à résoudre ces problèmes.

L'invention concerne d'abord un procédé de caractérisation de la nature d'un matériau selon la revendication 1.

Dans un procédé selon l'invention, la durée $\Delta t$ peut être par exemple comprise entre 1 ms et 10 ms ou entre 100 $\mu$s et quelques secondes, par exemple 1 s ou 5 s ou 10 s ; chaque spectre représente l'intensité en fonction de l'énergie ou du canal de détection.

La nature du matériau peut alors être obtenue par comparaison des coefficients de transmission avec des coefficients de transmission étalons.

Lorsque N est égal à 2, le procédé peut comporter:

- la sélection d'une première zone d'énergie, appelée zone basse énergie, et d'une une deuxième zone d'énergie, appelée zone haute énergie,
- le calcul de l'intégrale de la fonction de transmission, par rapport à l'énergie, formant ainsi au moins un premier coefficient ($\alpha$1) de transmission et un deuxième coefficient ($\alpha$2) de transmission.

La première zone d'énergie est de préférence comprise entre 15 et 50 keV et la seconde zone d'énergie peut être comprise entre 50 et 120 keV.

On peut ainsi déterminer la nature dudit matériau à l'aide desdites grandeurs ou coefficients statistiques, par exemple par positionnement des coefficients calculés dans un plan comportant des coefficients de matériaux connus en fonction de leur épaisseur.

De préférence le débit de fluence de photons incident sur le matériau est compris entre $10^6$ photons mm$^{-2}$.s$^{-1}$ et $10^7$ photons mm$^{-2}$s$^{-1}$.

Un procédé selon l'invention peut comporter une étape préalable de mesure du spectre en énergie du rayonnement de la source de rayons X, sans matériau interposé entre cette source et le détecteur.

Un procédé selon l'invention peut comporter en outre une étape de correction des spectres pour les perturbations résultant des phénomènes d'empilement.

L'invention concerne également un dispositif de caractérisation de la nature d'un échantillon de matériau selon la revendication 8.

De préférence, dans un dispositif selon l'invention, la source de rayons X permet d'émettre un rayonnement de photons incident dont le débit de fluence est compris entre $10^6$ mm$^{-2}$.s$^{-1}$ et $10^7$ mm$^{-2}$s$^{-1}$.

Dans un dispositif selon l'invention, le détecteur peut être par exemple en semi-conducteur ou de type scintillateur ou chambre d'ionisation.

Des moyens peuvent être prévus pour déterminer la nature dudit matériau à l'aide de ces deux coefficients.

Un tel dispositif, lorsque N est égal à 2, peut comporter des moyens pour :

- sélectionner une première zone d'énergie, appelée zone basse énergie, et une une deuxième zone d'énergie, appelée zone haute énergie,
- calculer l'intégrale de la fonction de transmission, par rapport à l'énergie, et former au moins un premier coefficient ($\alpha$1) de transmission et un deuxième coefficient ($\alpha$2) de transmission.

Un tel dispositif comporte de préférence en outre des moyens pour corriger les spectres des phénomènes d'empilement, par exemple :

- des moyens pour déterminer un spectre d'empilement (Emp), qui est la partie du spectre mesuré ($Sp_{mes}$), qui correspond uniquement aux seuls empilements,
- des moyens pour calculer au moins un premier spectre corrigé ($Sp_{cor}$), par différence entre le spectre mesuré ($Sp_{mes}$) et le spectre d'empilement (Emp).

Le spectre d'empilement peut être calculé à partir du spectre mesuré ($Sp_{mes}$) et des données de temps d'exposition ($T_{expo}$) et de temps mort ($T_{mort}$) du système, durée minimale, séparant deux photons, en-dessous de laquelle seul un photon sur les deux est détecté.

Des moyens peuvent être prévus pour déterminer le temps mort par simulation.

Un tel dispositif peut comporter des moyens pour réaliser le calcul de $N_{it}$ ($N_{it} \geq 1$) spectres corrigés ($Sp_{cor(n)}$) à partir du spectre corrigé d'ordre $Sp_{cor(n-1)}$, ou du spectre mesuré s'il n'y a pas de spectre corrigé précédent, par différence entre celui-ci et le spectre d'empilement (Emp). Un procédé selon l'invention peut mettre en oeuvre cette étape.

Un tel dispositif peut comporter des moyens pour réaliser les étapes suivantes, itérées $N_{it}$ fois, avec $N_{it} \geq 1$ :

- calcul de la probabilité d'empilement, en fonction du spectre corrigé $Sp_{cor(n-1)}$ précédent, c'est-à-dire établi lors de l'itération précédente, ou du spectre mesuré s'il n'y a pas de spectre corrigé précédent, et des données de temps d'exposition ($T_{expo}$) et de temps mort ($T_{mort}$),
- estimation d'un spectre d'empilement (Emp), en fonction du spectre corrigé précédent, ou du spectre mesuré s'il n'y a pas de spectre corrigé précédent, et du temps mort ($T_{mort}$),
- calcul d'un spectre corrigé, par différence entre le spectre mesuré ($Sp_{mes}$) et le spectre d'empilement estimé (Emp).

Un procédé selon l'invention peut mettre en oeuvre ces étapes itératives.

Un tel dispositif peut comporter des moyens pour calculer la probabilité moyenne d'empilement suivant la formule :

$$P_{mean} = 1 - \left(1 - 2 \times \frac{T_{mort}}{T_{expo}}\right)^{\sum\limits_{j=1}^{N\max} Sp_{cor(n-1)}(j)}$$

ou par la formule :

$$P_{mean} = 1 - \left(1 - 2 \times \frac{T_{mort}}{T_{expo}}\right)^{\sum\limits_{j=1}^{N\max} Sp_{cor(n-1)}(j)-1}$$

où $SP_{cor(n-1)}(j)$ est la valeur, pour le canal j, du spectre corrigé $SP_{cor(n-1)}$ précédent, ou du spectre mesuré s'il n'y a pas de spectre corrigé précédent.

Un procédé selon l'invention peut mettre en oeuvre cette étape de calcul de la probabilité moyenne d'empilement.

Le spectre d'empilement peut être calculé par la formule :

$$Emp(k) = \frac{1}{2} \times \sum_{i=1}^{Nc} \sum_{j=i}^{Nc} P_{i,j}(k)$$

Avec :

$$P_{i,j}(k) = 1 - \left[1 - 2 \times \delta t_{i,j}(k) / T_{\exp o}\right]^{Sp_{cor(n-1)}(E_i) \times Sp_{cor(n-1)}(E_j)}$$

Où $\delta_{i,j}(k)$ détermine la taille de l'intervalle d'écarts temporels $\Delta t$ séparant deux interactions d'énergie $E_i$ et $E_j$, dont l'empilement conduit à une valeur d'énergie détectée $E_k$.

Un procédé selon l'invention peut mettre en oeuvre cette étape de calcul du spectre d'empilement.

Des moyens peuvent être prévus pour estimer La fonction $\delta_{i,j}(k)$ à partir de la fonction inverse de la fonction d'empilement, cette dernière associant à un couple d'interactions d'énergies (Ei, Ej), l'énergie mesurée en fonction du décalage $\Delta t$ entre ces deux interactions. Cette fonction d'empilement peut être obtenue par simulation expérimentale ou en considérant qu'il s'agit d'une une fonction affine décroissante de l'énergie.

Selon un mode de réalisation, $\delta t_{ij}(k)$ est indépendant de k, et est égal quel que soit k à

$$\delta t_{i,j}(k) = \partial t_{ij} = \frac{E_{k+1} - E_k}{(E_i + E_j - \max(E_i, E_j)) / T_{mort}}$$

Un procédé selon l'invention peut mettre en oeuvre l'une ou l'autre de ces étapes de calcul de la fonction $\delta_{i,j}(k)$.

Un dispositif selon l'invention peut comporter un circuit apte à délivrer une impulsion analogique, en tension dont l'amplitude est proportionnelle à une charge détectée par le détecteur et un convertisseur analogique/numérique (ADC) qui numérise l'impulsion analogique et délivre un signal numérique, caractérisé en ce qu'il comprend, en aval du convertisseur analogique/numérique (ADC), un circuit de traitement qui comprend :

- une unité de lecture, à une fréquence de lecture $f_L$, des signaux numériques délivrés par le convertisseur analogique/numérique (ADC),
- une unité de calcul qui calcule une variation temporelle (S'(t)) des signaux numériques lus, et
- un circuit apte à capturer les signaux numériques lus dont la variation temporelle atteint un seuil prédéterminé (S1).

Dans un tel dispositif le circuit de traitement peut comporter, en outre, des moyens aptes à déterminer une durée entre deux instants successifs au cours desquels la variation temporelle S'(t) atteint un seuil prédéterminé (S2), S2 étant de signe opposé à S1 et des moyens de comparaison de ladite durée avec une valeur de seuil de durée ($T_m$), les moyens de comparaison de ladite durée conditionnant la capture de l'impulsion numérique lue de sorte qu'une impulsion numérique lue est capturée si, en outre, ladite durée déterminée est inférieure ou égale à la valeur de seuil de durée.

Les moyens aptes à déterminer une durée entre deux instants successifs au cours desquels la variation temporelle S'(t) atteint un seuil prédéterminé(S2), peuvent comporter un compteur qui est incrémenté à chaque valeur numérique de S'(t) déterminée, le comptage étant interrompu dès lors qu'un signal numérique S(t) est tel que la variation temporelle S'(t) a une amplitude inférieure au seuil d'amplitude (S2).

La valeur de seuil de durée ($T_m$) est de préférence le temps de montée d'un signal pris en sortie d'un préamplificateur de charges placé en entrée du dispositif comprenant un circuit apte à délivrer une impulsion en tension dont l'amplitude est proportionnelle à une charge détectée par le détecteur.

Le circuit apte à délivrer une impulsion en tension dont l'amplitude est proportionnelle à une charge détectée par le détecteur comprend de préférence un circuit de mesure d'énergie par ligne à retard.

Un procédé ou un dispositif selon l'invention mettent en oeuvre un seul détecteur, et non pas sur des techniques de comptage, mais une technique de spectrométrie, c'est-à-dire l'utilisation d'une distribution en amplitude des impulsions mesurées par le détecteur.

**BRÈVE DESCRIPTION DES DESSINS**

- Les figures 1A et 1B représentent des exemples de dispositif selon l'invention,
- la figure 2 est un exemple de spectres d'un faisceau incident avant et après transmission à travers un matériau,
- les figures 3 et 4 sont des exemples de fonctions de transmission,
- les figures 5A-5B illustrent des fonctions de transmission moyennées sur plusieurs mesures, des zones de sélection basse énergie et haute énergie étant positionnées en figure 5B,
- la figure 6 représente le positionnement d'un ensemble de mesures dans un plan $(\alpha_1, \delta_2)$,
- la figure 7 représente un ensemble de droites dans un plan $(\delta_1, \delta_2)$ pour divers matériaux,
- La figure 8 représente des mesures réalisées sur un système de spectrométrie expérimental.
- la figure 9 représente un modèle de fonction d'empilement à deux photons,
- la figure 10 représente une mesure du temps mort par ajustement de la formule du taux de comptage, pour un système paralysable, à des données expérimentales,
- la figure 11 représente la réalisation d'un procédé itératif selon l'invention,
- la figure 12 représente des courbes simulées de probabilités d'empilement pour un temps mort de 62 ns,
- la figure 13 représente une courbe de rapport de la probabilité d'empilement à deux photons sur la probabilité d'empilement totale, pour un temps mort de 62 ns,
- les figures 14A et 14B sont des mesures de spectre à différents flux, respectivement avant et après correction selon l'invention,
- la figure 15 représente un dispositif de détection de spectrométrie de rayonnement électromagnétique ionisant selon un mode de réalisation de l'invention,
- les figures 16 et 17 représentent des grandeurs électriques caractéristiques en sortie du circuit 82 de la figure 15,
- la figure 18 représente une vue détaillée d'un circuit du dispositif de détection de l'invention représenté en figure 15,
- les figures 20 et 21 représentent des signaux électriques caractéristiques du circuit représenté en figure 18,

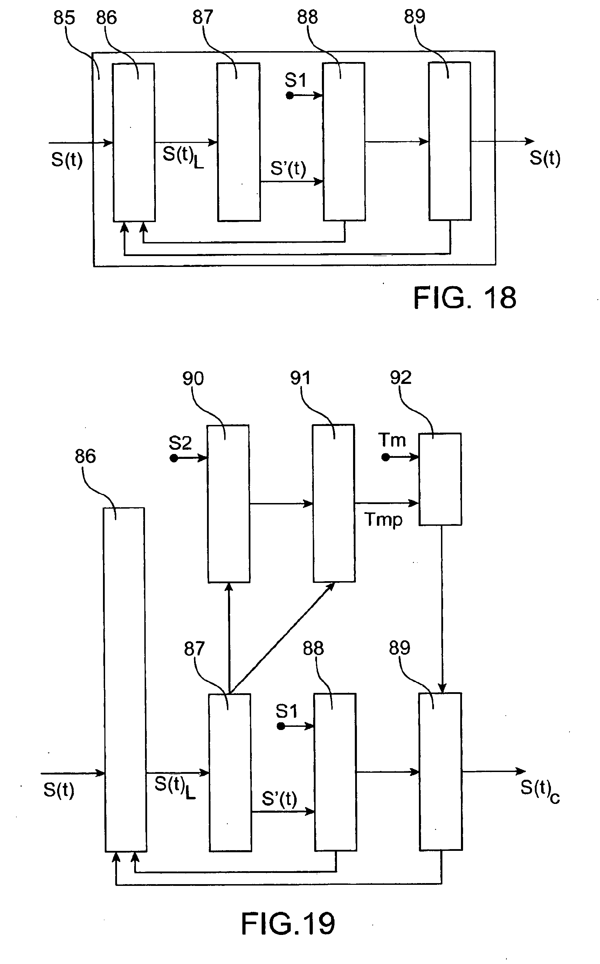

- la figure 19 représente un perfectionnement du circuit représenté en figure 18,

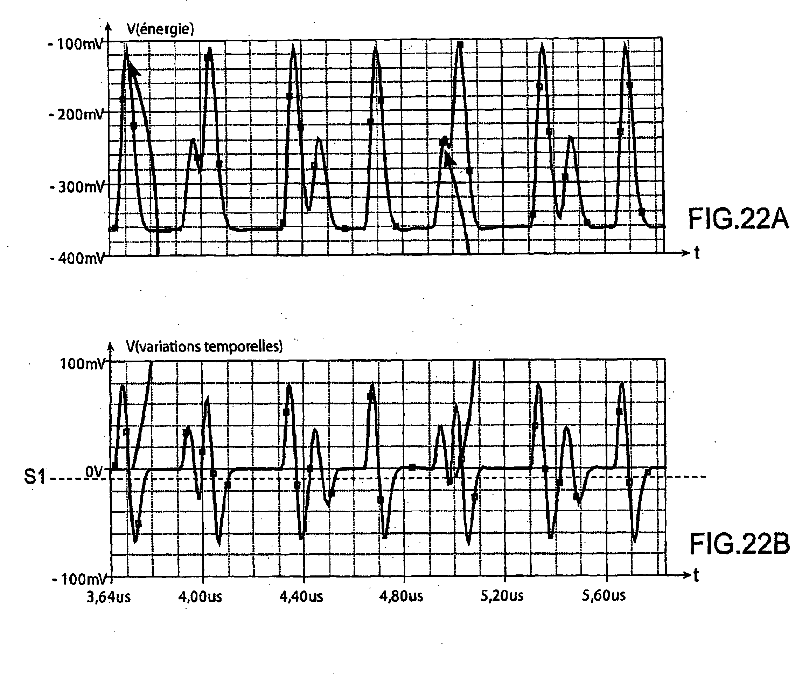

- les figures 22A et 22B représentent des signaux électriques caractéristiques du circuit de la figure 18 qui illustrent le fonctionnement du dispositif de l'invention en présence de nombreux empilements, et

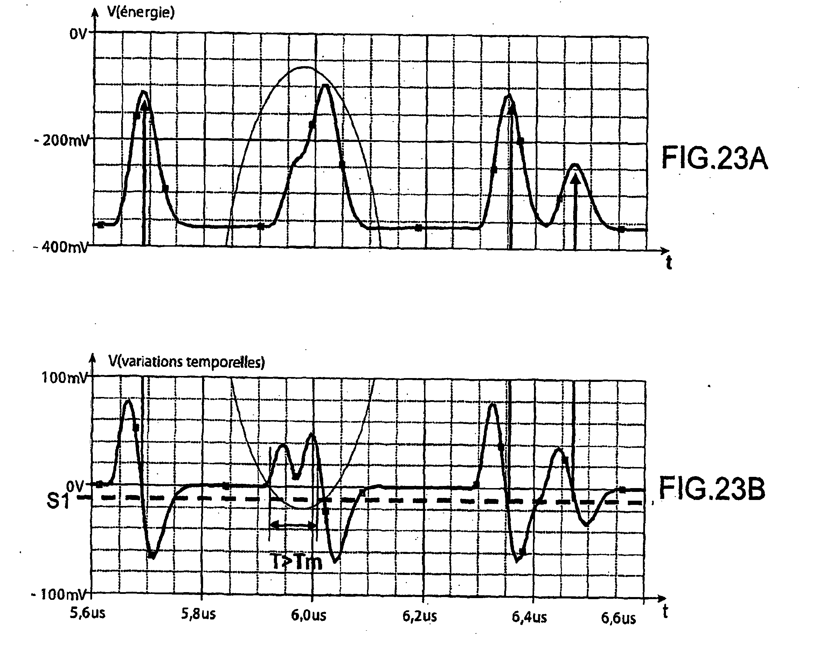

- les figures 23A et 23B représentent des signaux électriques caractéristiques du circuit de la figure 18 qui illustrent le traitement des coïncidences et des temps morts mis en oeuvre dans le dispositif de l'invention.

**EXPOSÉ DÉTAILLÉ DE MODES DE RÉALISATION DE L'INVENTION**

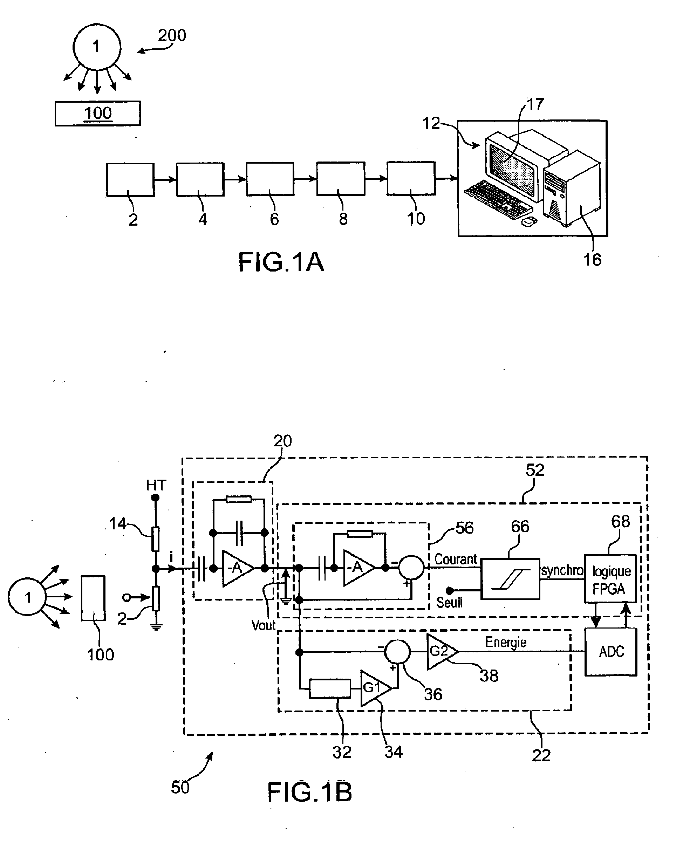

Un exemple de réalisation d'un dispositif selon l'invention va être donné, en liaison avec la figure 1A. Ce dispositif, une chaîne de spectrométrie 1, comporte les éléments suivants :

- une source de rayonnement 1, qui émet un rayonnement 200, par exemple avec un flux minimum de photons incidents compris entre $10^6$ mm$^{-2}$s$^{-1}$ et $10^7$ mm$^{-2}$s$^{-1}$
- un capteur 2, de type par exemple à conversion directe, par exemple encore en matériau semi-conducteur tel que CdTe ou CdTe:Cl, ou CdTe:In ou CdZnTe ; ce capteur est muni de deux électrodes aux bornes desquelles un signal traduit une interaction d'un rayonnement ou d'un photon avec le matériau du capteur, et la création d'un nuage de charges électroniques dans le matériau du capteur qui résulte de cette interaction. Ce capteur est par exemple parallélépipédique, comportant deux électrodes sur deux faces opposées, les électrodes étant par exemple orientées perpendiculairement au rayonnement incident.

Un autre type de capteur pouvant être utilisé est de type scintillateur ou de type chambre d'ionisation, d'une façon générale tout type de capteur permettant de délivrer un signal dont l'amplitude est proportionnelle à l'énergie déposée par une interaction, les semi-conducteurs étant les détecteurs préférés, et notamment les semi-conducteurs fonctionnant à température ambiante, par exemple CdTe, CdZnTe, CdMnTe, HgI2, AsGa, Si, TlBr... .

Un avantage d'un tel capteur, relié à un circuit électronique de spectrométrie, est la possibilité d'acquisition de signaux correspondant à des plages d'énergie bien déterminées. Le dispositif comporte en outre :

- un préamplificateur 4 de charges,
- un amplificateur 6,
- un convertisseur Analogique/Numérique 8,
- des moyens 10 pour réaliser un traitement du signal qui a été mis en forme et numérisé par les moyens 4, 6, 8, et pour former un spectre d'un rayonnement. D'autres moyens de traitement, par exemple basés sur des circuits à ligne à retard permettant notamment la mise en forme du signal, peuvent être prévus en amont du convertisseur analogique numérique.

- des moyens 12 pour réaliser un traitement des spectres selon un procédé conforme à l'invention.

On entend par spectre de rayonnement un histogramme de l'amplitude des impulsions détectées, comportant au moins deux canaux, chaque canal correspondant à une plage d'amplitudes déterminée. L'amplitude d'une impulsion étant proportionnelle à l'énergie déposée dans le détecteur par une interaction, un tel spectre est également un histogramme de l'énergie des interactions détectées.

Le nombre de canaux est égal à Nc, tel que Nc$\geq$2. Chaque canal comprend les impulsions dont l'énergie est comprise entre Ei et Ei + $\Delta$Ei. $\Delta Ei$ peut être identique pour chaque canal, de sorte que pour tout canal i, $\Delta Ei = \Delta E$, $\Delta E$ étant alors une constante.

Lors d'une utilisation du dispositif, un échantillon de matière 100 est disposé entre la source et le détecteur afin d'être caractérisé. Cet échantillon de matière peut-être également appelé matériau examiné.

Les moyens 12 comportent notamment un ordinateur ou un micro ordinateur ou un calculateur programmé pour mémoriser et traiter des données de spectre et des données pour mettre en oeuvre un procédé selon l'invention, par exemple les données de spectres transmis I et $I_0$ et/ou les données de coefficient $\mu(E)$ ou d'épaisseur de matière traversée. Peuvent également ainsi être calculés les coefficients de transmission $\alpha_1$ et $\alpha_2$ décrits plus loin.

Plus précisément une unité centrale 16 est programmée pour mettre en oeuvre un procédé de traitement selon l'invention, en calculant les données de fonction de transmission à partir des données de spectres transmis I et $I_0$.

Ces moyens 12 peuvent permettre également de commander la source 1 de rayonnement X, pour déclencher une émission de rayonnement et effectuer une ou plusieurs mesures à l'aide du détecteur 2.

Ces moyens électroniques 12 peuvent permettre de réaliser un contrôle synchrone du déclenchement de la ou des sources de rayonnement et du ou des détecteurs.

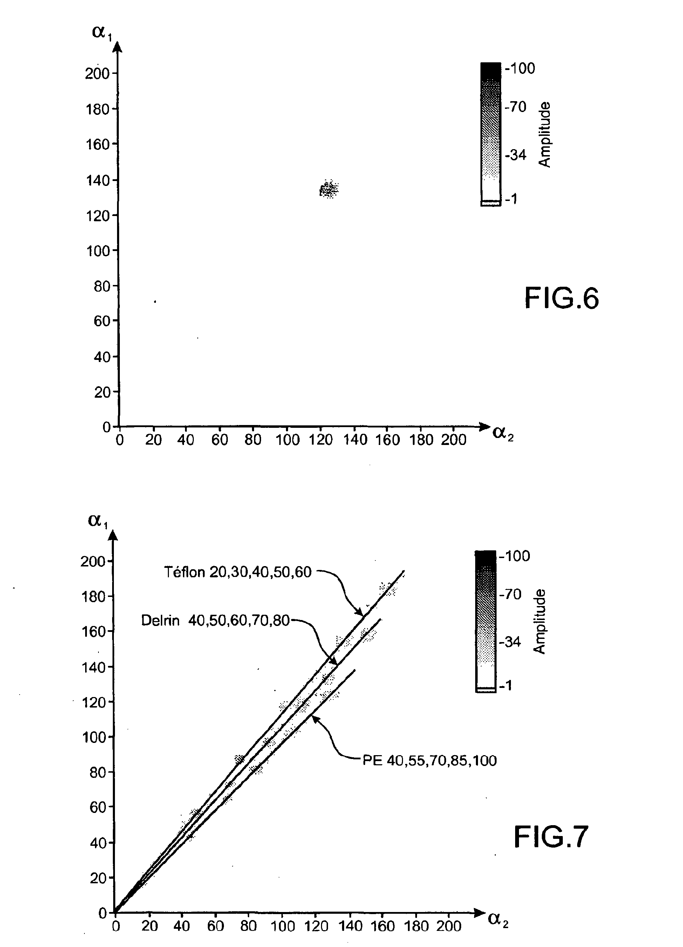

Ces moyens 12 peuvent permettre également de réaliser un positionnement des coefficients estimés $\alpha_1$ et $\alpha_2$ dans un plan comme celui de la figure 7 et en déduire la nature du matériau examiné.

A l'aide des moyens 12, un opérateur peut sélectionner un ou plusieurs paramètres pour réaliser ces opérations.

Il peut notamment sélectionner un nombre N de bandes d'énergies, N $\geq$ 2, à partir desquelles les coefficients de transmission $\alpha_n$, n $\geq$ 2, vont pouvoir être calculés. Chaque coefficient de transmission est calculé en appliquant une grandeur statistique à la fonction de transmission dans une bande d'énergie donnée. Cet indicateur peut-être par exemple l'intégrale ou la moyenne de la fonction de transmission dans la bande d'énergie considérée.

Lorsque N = 2, ces bandes d'énergie correspondent à une zone dite de basse énergie et une zone dite de haute énergie, et on détermine un premier coefficient de transmission $\alpha_1$, correspondant à la bande de basse énergie, et un second coefficient de transmission $\alpha_2$, correspondant à la bande de haute énergie.

Sur l'écran ou les moyens 17 de visualisation on peut afficher des spectres mesurés I et $I_0$ ainsi qu'une ou plusieurs fonctions de transmission et/ou une représentation telle que l'une des figures 6 et 7. À partir de ces moyens de visualisation, un opérateur peut également définir ou sélectionner les zones de basse énergie et de haute énergie à l'aide desquelles les coefficients indiqués ci-dessus vont être calculés.

Un tel dispositif peut également mettre en oeuvre une ligne à retard permettant de mettre en forme les impulsons en forme de trapèze, couplé à une électronique numérique et un traitement associé, par exemple un circuit de traitement et de numérisation d'un spectre en énergie tel que celui décrit dans le document EP 2 071 722. On peut ainsi obtenir des mesures spectrométriques sur 256 canaux en un temps de mesure de quelques ms.

Ce dispositif, illustré en figure 1B, comporte principalement :

- un circuit 20 de pré-amplification de charges du type intégrateur, apte à être connecté au détecteur 2 à semi-conducteur (la résistance 14 désigne une résistance de polarisation associée au détecteur 2),
- un circuit 22 de mesure d'énergie par ligne à retard (comportant une ligne à retard 32, un premier gain 34, un soustracteur 36 et un second gain 38), connecté en sortie du circuit de pré-amplification, et
- un échantillonneur connecté en sortie du circuit de mesure d'énergie.

Il comporte en outre un circuit de synchronisation 52 comprenant :

- un circuit 56 de mesure d'impulsions de courant, connecté en sortie du circuit de pré-amplification 20 et réalisant la différence entre la sortie et une dérivée de la sortie du circuit de pré-amplification, et
- un circuit de discrimination 66 formant un signal binaire en fonction de la sortie du circuit 22 de mesure d'impulsions, ledit signal logique commandant les instants d'échantillonnage de l'échantillonneur.

Sur cette figure, les références 1 et 100 ont la même signification que sur la figure 1A.

Des moyens tels que les moyens 12 décrits ci-dessus peuvent être combinés avec ce circuit pour réaliser un dispositif mettant en oeuvre un procédé selon l'invention.

D'autres aspects de ce circuit sont décrits dans le document EP 2071722.

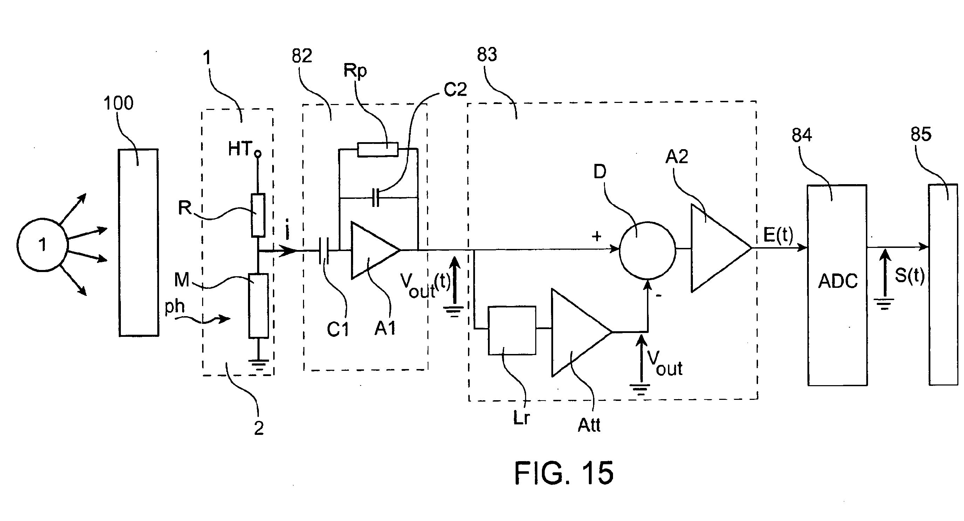

Par ailleurs, on peut de préférence utiliser le circuit décrit ci-dessous en liaison avec les figures 15 - 23B. Là encore, des moyens tels que les moyens 12 décrits ci-dessus peuvent être combinés avec ce circuit pour réaliser un dispositif mettant en oeuvre un procédé selon l'invention.

Par ailleurs, on peut utiliser le circuit décrit dans FR 09 56844 ou dans FR 09 58506.

Un dispositif selon l'invention permet de réaliser une mesure d'un spectre $I_0$ d'un faisceau incident : ce spectre peut être moyenné sur un grand nombre d'acquisitions afin de minimiser l'effet du bruit photonique. Ce spectre $I_0$ est le spectre du rayonnement détecté par le détecteur en l'absence de matériau (matériau examiné ou matériau étalon) entre la source et le détecteur.

Ensuite, on positionne devant le faisceau l'objet 100 à analyser (figure 1A, typiquement un bagage ou, plus généralement, un échantillon de matériau à analyser) et on mesure le spectre I du rayonnement transmis à travers cet objet pendant la durée choisie, par exemple comprise entre quelques centaines de μs et quelques 100 ms, et généralement inférieure à 10 ms ou quelques dizaines de ms. Ce spectre I peut-être moyenné ou non, mais de préférence, il ne l'est pas.

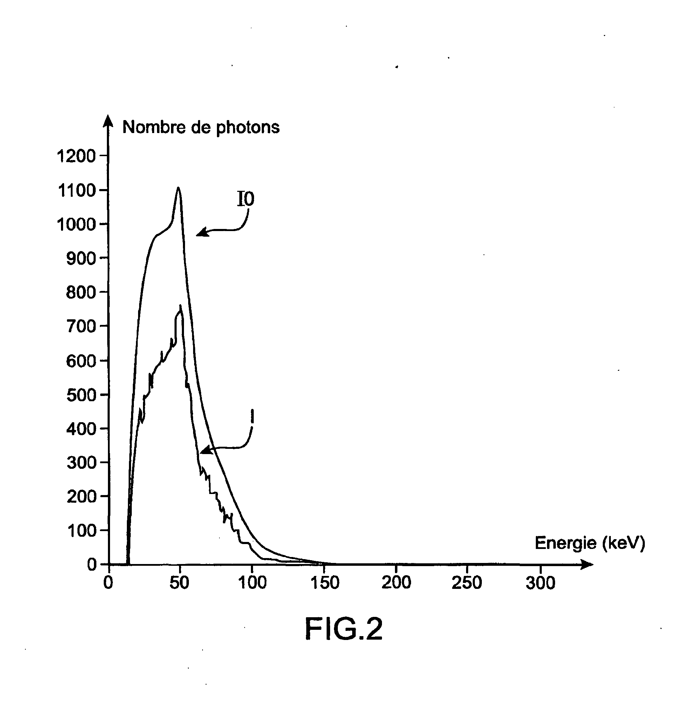

Un exemple des mesures ainsi réalisées est illustré en figure 2, où l'on voit les deux spectres I et $I_0$.

D'une façon générale, par fonction de transmission, on entend une fonction comparant, à une énergie donnée, ou sur une plage d'énergie donnée, l'intensité du rayonnement transmis par l'objet à l'intensité du rayonnement incident à l'objet.

De préférence, cette comparaison est réalisée par un ratio, si bien que la fonction de transmission est obtenue en effectuant un rapport entre l'intensité du rayonnement transmis par l'objet et l'intensité du rayonnement incident à cet objet, à une énergie donnée.

Ainsi, si $I_0(E)$ désigne le nombre de photons incidents par unité de temps à l'énergie E, et si I désigne le nombre de photons transmis par l'objet par unité de temps à l'énergie E, la fonction de transmission peut être obtenue à partir de I(E) et de $I_0(E)$, en réalisant leur rapport.

La fonction de transmission TR(E) correspond alors à $$TR(E) = \frac{I(E)}{I_0(E)}$$

Si μ(E) désigne le coefficient d'atténuation linéaire du matériau constituant l'objet, à l'énergie E et si l désigne l'épaisseur de l'objet traversée par le rayonnement, on sait que

$$I(E) = I_0(E)e^{-\mu(E)l}$$

Aussi, afin d'obtenir une fonction linéairement dépendante du coefficient d'atténuation linéaire du matériau constituant l'objet, il peut être avantageux d'exprimer la transmission des photons dans le matériau en utilisant le logarithme du ratio précédemment décrit. Dans ce cas, la fonction de transmission correspond à

$$TR(E) = -\ln\left(\frac{I(E)}{I_0(E)}\right)$$

Cette fonction est usuellement désignée par le terme fonction d'atténuation.

Par conséquent, dans cette demande, le terme fonction de transmission désigne :

- une fonction obtenue à partir d'un rapport entre l'intensité du rayonnement transmis par l'objet sur l'intensité du rayonnement incident à l'objet, à une énergie donnée, par exemple $TR(E) = \frac{I(E)}{I_0(E)}$,

- ou une fonction obtenue à partir du logarithme du rapport décrit dans l'alinéa précédent, par exemple $TR(E) = -\ln\left(\frac{I(E)}{I_0(E)}\right)$, cette fonction pouvant être également être dénommée fonction d'atténuation. Dans la suite de la demande, c'est cette définition qui sera utilisé.

Précisons que I et $I_0$ désignent respectivement l'intensité du rayonnement transmis par l'objet et l'intensité du rayonnement incident à l'objet. Généralement, I et $I_0$ sont des flux (nombre de photons par secondes), mais il peut naturellement s'agir de débits de fluence (nombre de photons par seconde par unité de surface) ou d'un nombre de photons détectés durant un temps déterminé.

I et $I_0$ sont homogènes : ils désignent une grandeur de même type. I est mesuré par le détecteur en présence de l'objet entre le matériau et la source, $I_0$ étant soit mesuré en l'absence de matériau, soit déterminé par calcul en connaissant les paramètres d'émission de la source.

Dans le reste de la description, I et $I_0$ sont respectivement le nombre de photons transmis par l'objet par unité de temps et le nombre de photons incidents l'objet par unité de temps.

Pour un matériau donné, présentant, à une énergie E, un coefficient d'atténuation linéaire $\mu(E)$ donné, le logarithme Népérien de la fonction de transmission varie linéairement avec l'épaisseur du matériau.

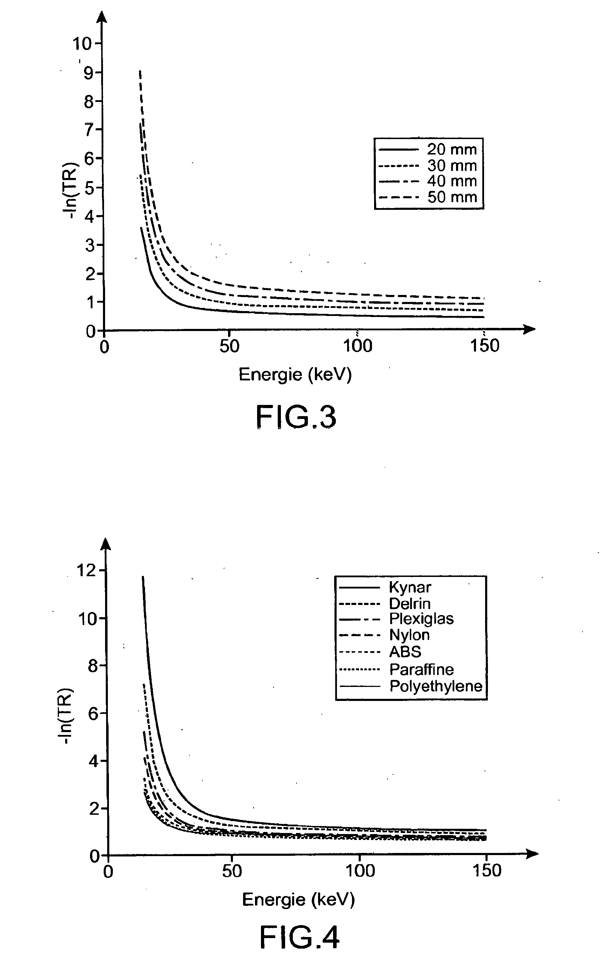

La figure 3 montre les fonctions de transmission d'un même matériau (le Delrin) à différentes épaisseurs (20 mm, 30 mm, 40 mm, 50 mm). On constate que les différentes fonctions de transmission sont bien proportionnelles les unes aux autres.

Afin de déterminer dans quelle gamme d'énergie les fonctions de transmission permettent de discriminer au mieux deux matériaux différents (c'est-à-dire des matériaux de nature différente), on a représenté en figure 4 les fonctions de transmission de différents matériaux à une même épaisseur (40 mm).

Sur cette figure, on constate que ces fonctions ont toutes la même allure générale, mais qu'elles permettent de différencier des matériaux entre eux selon la nature de ces matériaux. Elles sont proportionnelles les unes aux autres dans les hautes énergies (supérieures à 70 keV), alors que leurs allures se différencient mieux aux basses énergies (inférieures à 70 keV ou même à 50 keV).

Par conséquent l'analyse de la fonction de transmission est un moyen de caractériser un objet.

Cette fonction constitue une signature de l'objet, signature de son épaisseur par son facteur multiplicatif par rapport à une épaisseur de référence et signature de son matériau, qui détermine la forme de cette courbe.

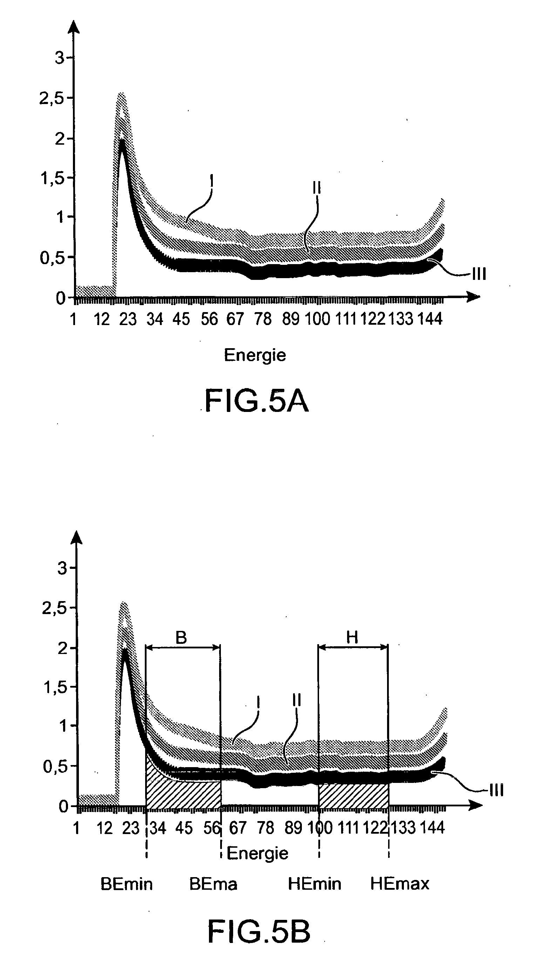

On peut réaliser une moyenne des résultats obtenus sur un certain nombre de mesures, ce qui permet d'en réduire le bruit photonique. Ainsi, on a représenté, en figure 5A, une moyenne réalisée sur 100 mesures pour trois matériaux plastiques de densité différentes : le téflon (courbe I), le Delrin (courbe II) et le polyéthylène (courbe III).

L'intérêt du Delrin est qu'il possède des caractéristiques (densité et numéro atomique) proche des explosifs courants.

Selon un mode de réalisation, on peut s'intéresser à deux bandes d'énergie (N = 2), une première bande dite de basse énergie (et est limitée par deux valeurs $BE_{min}$ et $BE_{max}$, voir figure 5B), et une seconde bande dite de haute énergie (et est limitée par deux valeurs $HE_{min}$ et $HE_{max}$).

Plus précisément, on peut identifier ces deux zones par l'un et/ou l'autre des critères suivants Chacune de ces zones est relativement large, de largeur comprise entre 5 keV et 50 keV, de préférence 15 - 50 keV. Une première zone, dite de basse énergie, particulièrement pertinente est comprise entre 22 et 40 keV, et une seconde zone, dite de haute énergie, peut être choisie entre 50 et 120 keV, et très avantageusement entre 54 et 112 keV.

De préférence, chaque zone ne présente pas de perturbations de type bruit électronique (affectant les faibles énergies). On évite notamment une zone, aux hautes énergies, présentant une statistique trop faible.

De préférence ces zones se limitent aux canaux pour lesquels la fonction de transmission n'a pas de distorsion évidente: on évite donc les canaux extrêmes du spectre.

De préférence encore, dans une première zone, les fonctions de transmission se comportent de façon sensiblement différentes les unes des autres (basse énergie) tandis, que dans la seconde zone, les fonctions de transmission sont relativement parallèles les unes aux autres (c'est le cas à haute énergie) Ainsi, une première zone sera très sensible, c'est-à-dire variera significativement selon la nature du matériau et/ou selon son épaisseur, tandis qu'une seconde zone évoluera beaucoup moins que la première zone en fonction de la nature du matériau et/ou de son épaisseur.

Dans chacune de ces deux zones, on peut calculer, l'intégrale de la courbe de transmission par rapport à la variable énergie. Mais on peut également utiliser d'autres grandeurs statistiques que l'intégrale, par exemple la moyenne.

Dans le cas où la grandeur statistique choisie est l'intégrale, on réalise ensuite le calcul de deux coefficients, chacun égal à l'intégrale en énergie de la fonction de transmission dans chacune de ces deux zones.

Par exemple, pour le polyéthylène, dont la fonction de transmission est notée $TR_{PE200}(E)$ :

$$\alpha 1 = \int_{BE\min}^{BE\max} TR_{PE200}(E)$$

et

$$\alpha 2 = \int\limits_{HE\min}^{HE\max} TR_{PE\,200}(E)$$

Les mêmes coefficients peuvent être calculés, pour le téflon et le delrin par exemple, et comparés entre eux pour identification.

Les deux coefficients $\alpha 1$ et $\alpha 2$ sont calculés à partir de la fonction de transmission, et cela peut se faire en un faible temps d'intégration (quelques ms).

Si pour chaque mesure correspondant à un temps d'intégration, on représente dans un plan un point de coordonnées ($\alpha 1, \alpha 2$), on obtient, par exemple pour 1000 mesures successives, un nuage de points qui ont des coordonnées identiques ou très proches, comme représenté en figure 6.

Afin de démontrer les performances de cette méthode d'analyse des fonctions de transmission de matériaux en vue d'en discerner la nature et l'épaisseur, on présente, toujours dans le plan ($\alpha 1, \alpha 2$) (figure 7), les résultats obtenus pour plusieurs épaisseurs de matériaux caractéristiques.

Pour un même un matériau les nuages de points (à chaque point correspond une mesure) sont alignés sur la droite I pour le téflon, sur la droite II pour le Delrin et III pour le polyéthylène.

La variation en épaisseur (exprimée en mm) entraine un déplacement de ce nuage le long de la droite qui le concerne. Ce nuage correspond à l'ensemble des points de coordonnées ($\alpha_1, \alpha_2$) pour un même matériau, et pour différentes épaisseurs. Ce nuage, ou cet ensemble de points, peut-être déterminé en interpolant différentes mesures permettant de calculer, pour un même matériau, les coefficients ($\alpha_1, \alpha_2$) correspondant à différentes épaisseurs.

On peut ainsi utiliser différents matériaux étalons, et déterminer, pour chaque matériau étalon, un ensemble de points étalon, chaque ensemble de points étalon étant déterminé à partir des points étalons ($\alpha_{\text{matériauétalon1}}$, $\alpha_{\text{matériauétalon 2}}$) correspondant à différentes épaisseurs d'un même matériau étalon. Un point étalon de coordonnée ($\alpha_{\text{matériauétalon1}}$, $\alpha_{\text{matériauétalon2}}$) peut-être obtenu par mesure, ou par interpolation de plusieurs mesures réalisées avec différentes épaisseurs d'un même matériau étalon.

Par conséquent, on peut utiliser les deux coefficients ($\alpha 1, \alpha 2$) pour remonter à la nature et/ou l'épaisseur d'un matériau examiné. Cette opération de positionnement dans le plan ($\alpha 1, \alpha 2$) peut être réalisée de manière automatique à l'aide des moyens 12. On peut par exemple déterminer l'ensemble de points étalon le plus proche du point de coordonnées ($\alpha 1, \alpha 2$). Cela permettra de déterminer la nature du matériau examiné. Si l'on souhaite également connaître l'épaisseur d'un tel matériau, on peut déterminer le point étalon le plus proche, l'épaisseur du matériau examiné étant alors considérée égale à l'épaisseur correspondant au point étalon ($\alpha_{\text{matériauétalon1}}$, $\alpha_{\text{matériauétalon2}}$) le plus proche.

Dans un procédé selon l'invention, on réalise une mesure (ou une estimation) de $I_0$, une mesure de I, de la manière expliquée ci-dessus.

Puis le système calcule en temps réel, pour chaque canal d'énergie la fonction de transmission TR(E) qui peut être exprimée par: $-\ln(\dfrac{I}{Io}) = \mu(E).l$

On obtient ainsi la fonction de transmission correspondant au matériau traversé par le faisceau, en fonction de l'énergie, représentée en figure 4.

On peut alors choisir, par exemple à l'aide des moyens 12, 16, 17, les bandes B, H, puis calculer les deux coefficients $\alpha_1$, $\alpha_2$. On peut ensuite remonter à la nature et l'épaisseur des matériaux observés, comme expliqué ci-dessus en liaison avec la figure 7.

Les données de la figure 7 peuvent être mémorisées dans un dispositif de traitement de donnée.

Le positionnement des deux coefficients $\alpha_1$, $\alpha_2$ dans le plan de la figure 7 peut également être réalisé par un tel dispositif. Autrement dit, l'ensemble du procédé peut être automatisé.

D'une façon générale, on comprendra que la nature et/ou l'épaisseur des matériaux mesurés sont déterminées en comparant les valeurs de coefficients de transmission($\alpha 1$, $\alpha 2$) mesurés à un ou plusieurs couples de coefficients de transmission étalons ($\alpha 1_{\text{matériau-étalon}}$, $\alpha 2_{\text{matériau étalon}}$), les couples de coefficients de transmission étalons ($\alpha 1_{\text{matériau-étalon}}$, $\alpha 2_{\text{matériau étalon}}$) étant obtenus, selon les mêmes bandes d'énergie, à partir de fonctions de transmission correspondant à un ou plusieurs matériaux étalons de nature et d'épaisseur connues.

Jusqu'à présent, on a décrit un mode de réalisation selon lequel on distingue deux bandes d'énergie de la fonction de transmission TR(E), chaque bande permettant de définir un coefficient de transmission $\alpha i$, $1 \leq i \leq 2$. Mais on peut généraliser cette invention à la détermination de N coefficients de transmission $\alpha i$, $1 \leq i \leq N$ et N pouvant être > 2, chaque coefficient $\alpha i$ étant déterminé à partir d'une grandeur statistique, par exemple l'intégrale, appliquée à une bande d'énergie du spectre en énergie de la fonction de transmission.

On peut ensuite représenter cette mesure dans un espace à N dimensions, chaque axe de cet espace représentant alors les valeurs d'un coefficient de transmission $\alpha_i$. Ainsi, à chaque mesure correspond un point dans cet espace à N dimensions, dont les coordonnées sont $(\alpha_1, \alpha_2,..\alpha_N)$

On peut comparer chaque Nuplet de coefficients de transmission $(\alpha 1, \alpha 2, ..\alpha N)$ déterminés avec un matériau inconnu à un ou plusieurs Nuplets de coefficients de transmission étalons $(\alpha_{\text{imatériau-étalon}}, ...\alpha_N\text{matériau étalon})$ obtenus avec un ou plusieurs matériaux étalons, de nature et d'épaisseurs connues.

Chaque Nuplet de coefficients de transmission étalon, ou Nuplet étalon, est obtenu déterminant la fonction de transmission TR(E) à un matériau étalon de nature et d'épaisseur connu. Autrement dit, pour chaque matériau étalon, on établit une fonction de transmission, on sélectionne N bandes d'énergies et on établit un indicateur $\alpha_i$ à chacune de ces bandes d'énergie. Naturellement, on comprendra que, de façon préférentielle, les bandes d'énergie et les grandeurs statistiques utilisées pour déterminer respectivement les coefficients de transmission du matériau examiné $(\alpha 1, \alpha 2, ..\alpha N)$ et les coefficients de transmission étalons $(\alpha_{\text{imatériau-étalon}}, ...\alpha_N\text{matériau étalon})$ sont les mêmes.

On peut également déterminer, pour un matériau étalon de nature et d'épaisseurs données, un Nuplet étalon en interpolant plusieurs Nuplets étalons correspondant à un matériau de la même nature mais d'épaisseurs différentes.

On peut également définir, pour chaque matériau étalon, un ensemble de points étalon, chaque ensemble regroupant les Nuplets étalons correspondant au même matériau étalon. Suivant la valeur de N, cet ensemble peut prendre la forme d'une droite (par exemple pour N = 2), ou d'une surface 3D (par exemple pour N = 3).

Ainsi, on lorsqu'on a déterminé le Nuplet de coefficient de transmission $(\alpha 1, \alpha 2, ..\alpha N)$ correspondant à un matériau inconnu, il est possible d'obtenir la nature et l'épaisseur dudit matériau inconnu en comparant ce Nuplet $(\alpha 1, \alpha 2, ..\alpha N)$ aux différents Nuplets étalons.

La comparaison de chaque Nuplet d'un matériau examiné $(\alpha 1, \alpha 2, ..\alpha N)$ à un ou plusieurs Nuplets étalons $(\alpha_{\text{imatériau-étalon}}, ...\alpha_N\text{matériau étalon})$ peut être par exemple une mesure de la distance entre un Nuplet $(\alpha 1, \alpha 2, ..\alpha N)$ et chaque Nuplet étalon $(\alpha_{\text{imatériau-étalon}}, ...\alpha_N\text{matériau étalon})$ de chaque matériau étalon. La nature et l'épaisseur du matériau examiné correspondent alors à la nature et à l'épaisseur du matériau étalon représenté par le Nuplet étalon dont les coordonnées sont les plus proches.

On pourra par exemple utiliser la distance Euclidienne.

On peut également déterminer seulement la nature d'un matériau. Dans ce cas, elle sera supposée être celle du matériau étalon correspondant au Nuplet étalon le plus proche, ou celle de l'ensemble de points étalon le plus proche (on rappelle qu'un ensemble de Nuplets étalon correspond au regroupement des points étalons correspondant à un même matériau étalon).

On peut également déterminer seulement l'épaisseur d'un matériau, par exemple si la nature de ce matériau est présumée connue. Dans ce cas, elle sera supposée être celle du matériau étalon correspondant au Nuplet étalon le plus proche.

Un exemple de mise en oeuvre d'un procédé selon l'invention comporte les étapes suivantes :

- réaliser une mesure du spectre en énergie du faisceau incident,
- positionner l'objet 100 à caractériser sur le trajet du faisceau incident et mesurer le spectre du faisceau transmis
- calculer la fonction de transmission de l'objet, par exemple $-\ln\left(\dfrac{I}{Io}\right)$, sur toute la gamme d'énergie et avec tous les canaux,
- calculer deux coefficients de transmission: le premier coefficient $\alpha_1$, obtenu en sommant la fonction de transmission sur les canaux de basse énergie et le deuxième coefficient de transmission $\alpha_2$ obtenu en sommant la fonction de transmission sur les canaux de haute énergie, les intervalles de sommation étant de préférence choisis comme indiqué ci-dessus, notamment afin d'éviter les zones de distorsion de la fonction de transmission,
- identifier la nature et l'épaisseur de l'objet à identifier, à l'aide de ces deux coefficients.

L'invention permet de réaliser une spectrométrie rapide, par exemple dans une durée de l'ordre de, ou inférieure à, quelques secondes, et sous rayonnement intense, sur suffisamment de canaux d'énergie pour pouvoir différentier des matériaux par l'analyse de leurs fonctions de transmission dans les temps brefs imposés pour une analyse rapide.

En comparaison, les systèmes connus, qui ont été rappelés en introduction, utilisent des détecteurs associés à des compteurs : ils sont donc capables de compter les photons provenant de chaque détecteur, mais ne permettent pas de sélectionner les photons détectés selon une ou plusieurs bandes d'énergie déterminés. A la différence de la présente invention, ils ne font pas de mesures spectrométriques qui, pourtant, s'avèrent très profitables pour l'identification de matériaux par car elles permettent d'obtenir une fonction de transmission en fonction de l'énergie, à partir d'un seul détecteur.

Lorsque les mesures doivent être effectuées rapidement, en particulier dans l'application à une mesure sur des bagages, le rayonnement photonique est intense, le débit de fluence étant généralement compris entre $10^6$ photons/mm$^2$/s et $10^7$ photons mm$^2$/s. Pour ce type d'application, le temps de mesure sera faible, généralement inférieur à quelques dizaines de ms, voire à 10 ms.

On mettra donc, de préférence, en oeuvre un procédé de traitement de signal permettant de détecter et de corriger les spectres perturbés par les phénomènes d'empilement.

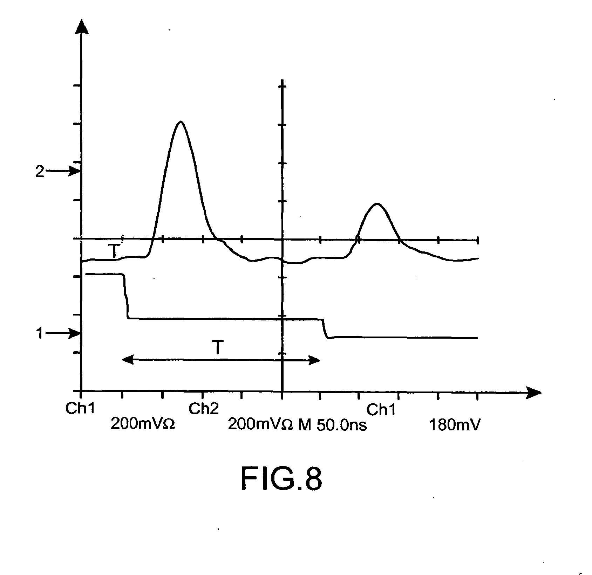

Un tel procédé, pouvant être mis en oeuvre dans le cadre de la présente invention, est présenté ci-dessous en liaison avec les figures 8A - 14B.

A partir d'un rayonnement X incident 200 ayant un spectre $Sp_0$, un spectre $Sp_{mes}$ est mesuré à l'aide du capteur 2 et, par exemple, des moyens de traitement 4-12 ou du dispositif de la figure 1B ou d'un dispositif selon l'une des figures 15 - 20. Soit $T_{expo}$ le temps d'exposition, à savoir le temps utilisé pour acquérir ce spectre.

Un tel spectre comporte des perturbations qui proviennent des phénomènes d'empilement de photons.

On désigne par $Sp_0(E)$ le nombre de photons du rayonnement incident 200 à une certaine énergie E.

Soit $P_{mean}$ la probabilité pour chaque photon de s'empiler avec au moins un autre photon.

Le spectre mesuré à l'énergie E peut alors être déduit du spectre incident par l'égalité suivante :

$$Sp_{mes}(E) = Sp_0(E) \times (1 - P_{mean}) + Emp(E)$$

Le facteur $(1-P_{mean}) \times Sp_0(E)$ représente l'ensemble des photons qui n'ont pas subi d'empilement.

Le terme $Emp(E)$ est la contribution à la mesure, à l'énergie E, de l'ensemble des photons du spectre $Sp_0$ qui sont empilés (c'est le « spectre d'empilement »). $Emp(E)$ dépend du spectre incident $Sp_0$ et du comportement du système constitué par le capteur 2 et par les moyens électroniques 4 - 10 vis-à-vis des photons détectés à des temps très proches, c'est-à-dire en situation d'empilement.

On définit le temps mort $T_{mort}$ : il s'agit de la durée minimale, séparant deux interactions (deux évènements), en-dessous de laquelle seul un évènement sur les deux est détecté.

Pour deux photons incidents sur le capteur, pendant la durée $T_{expo}$, il y a empilement si l'instant d'interaction $t_1$ d'un photon dans le capteur 2 est séparé, temporellement, de l'instant d'interaction $t_2$ de l'autre photon, dans le capteur 2, d'une durée inférieure à $T_{mort}$, autrement dit si $|t_2 - t_1| \leq T_{mort}$.

L'arrivée des photons dans le détecteur 2 étant supposée équiprobable au cours de la durée $T_{expo}$, la probabilité d'empilement de ces deux interactions :

$$P_0 = 2 \times T_m / T_{expo}$$

Inversement :

- la probabilité pour une interaction produite par un photon incident de ne pas s'empiler avec une interaction produite par un autre photon est $1-P_0$,
- la probabilité pour cette même interaction de ne pas s'empiler avec aucune autre interaction d'un autre photon est égale au produit des probabilités des différents évènements, car ce sont des évènements indépendants.

La probabilité $P_{mean}$ d'empilement d'une interaction produite par un photon incident avec au moins une autre interaction produite par un autre photon est donc égale à :

$$P_{mean} = 1 - (1 - P_0)^{N-1}$$

Où N représente le nombre de photons détectés, c'est-à-dire le nombre de coups mesurés dans le spectre incident: $N = \sum_E Sp_0(E)$ .

Dans la suite, les énergies étant discrétisées, on note $E_i$ la gamme d'énergie des photons détectés en l'absence d'empilements dans le $i^{ème}$ canal du capteur spectrométrique Afin d'estimer le spectre d'empilement, on part de l'approximation selon laquelle tous les empilements concernent deux photons exactement.

Les limites de cette approximation sont étudiées et discutées plus loin.

Lorsque deux photons sont absorbés par le capteur dans une situation d'empilement, seul un événement est compté.

Pour bien comprendre cet aspect, la figure 8 présente des mesures réalisées sur un système de spectrométrie expérimental, plus précisément, elle présente temporellement les impulsions générées par deux particules après mise en forme par le circuit électronique.

Pour un faible décalage temporel (l'instant d'interaction $t_1$ du premier photon et l'instant d'interaction $t_2$ de l'autre photon vérifient l'inégalité $|t_2 - t_1| \leq T_{mort}$), une seule interaction est comptée, tandis que pour un décalage temporel supérieur à environ $T_{mort}$, deux interactions, correspondant aux deux photons, sont comptées.

En outre lorsqu'une seule interaction est comptée, l'énergie ne correspond pas à l'énergie déposée par l'un ou l'autre de ces photons, , mais à une énergie différente. Le spectre d'empilement Emp(E) correspond à une estimation de la partie du spectre mesuré $Sp_{mes}(E)$ résultant d'empilements. Il est obtenu en quantifiant l'énergie à laquelle un seul évènement, compté pour deux interactions en situation d'empilement, est mesuré. L'estimation de ce spectre d'empilement est réalisée en deux étapes :

- on modélise d'abord les fonctions d'empilement à deux photons,
- on somme ces fonctions sur l'ensemble des couples d'énergie possibles $E_i$, $E_j$, avec $1 \leq i \leq Nc$ et $j \leq i \leq Nc$, Nc étant de nombre de canaux pour estimer le spectre d'empilement.

Pour estimer d'abord les fonctions d'empilement à deux photons, ou plus exactement aux interactions produites par deux photons,, considérons un couple de photons déposant dans le détecteur les énergies $(E_i, E_j)$.

On appelle fonction d'empilement la fonction qui associe à ce couple l'énergie mesurée en fonction du décalage $\Delta t$ entre les instants d'arrivée des deux photons :

$$F_{E_i,E_j} \: : \: \Delta t \mapsto E$$
$$[0, T_{mort}] \to [\max(E_i, E_j), E_i + E_j]$$

Autrement dit, la fonction d'empilement $F_{Ei,Ej}$ établit une relation entre le décalage temporel de deux interactions empilées d'énergies Ei et Ej et l'énergie attribuée à cet empilement.

On donnera plus loin un exemple de modélisation de cette fonction, qui est une fonction décroissante du décalage $\Delta t$.

Pour $\Delta t = 0$, cette fonction atteint sa valeur maximale $E_i + E_j$. Il s'agit alors d'une détection en coïncidence : les deux photons ayant interagi sont donc indissociables et leurs énergies s'ajoutent.

La valeur minimale de cette fonction est $\max(E_i, E_j)$. En effet, l'énergie mesurée reste toujours supérieure ou égale à l'énergie déposée par le photon ayant déposé la plus forte énergie dans le détecteur c'est-à-dire $\max(E_i, E_j)$

Ceci est illustré en figure 9, où la figure du haut représente de l'énergie mesurée pour le photon de plus haute énergie max (E1, E2), et celle du bas l'énergie mesurée pour le photon de plus basse énergie min (E1, E2).

Pour un décalage temporel nul (cas de la détection en coïncidence), la mesure est faussée car on mesure un évènement à une énergie égale à la somme des énergies des photons (soit $E_1 + E_2 = \max(E_1, E_2) + \min(E_1, E_2)$).

Pour un décalage égal ou supérieur au temps mort, chacun des deux photons est bien mesuré à sa propre énergie (celui de plus haute énergie à Max (E1, E2) et celui de plus basse énergie à min $(E_1, E_2)$).

Pour un décalage temporel intermédiaire, on mesure un évènement à une énergie variable entre $E_1 + E_2$. On voit bien qu'il s'agit là d'une fonction continue et décroissante sur l'intervalle $[0, T_{mort}]$.

Cette fonction de l'énergie mesurée en fonction du décalage temporel est donc inversible. Son inverse, notée $F^{-1}$, permet d'associer à une énergie, comprise entre la valeur maximale $E_i + E_j$ et la valeur minimale $\max(E_i, E_j)$, un intervalle de temps :

$$F^{-1}{}_{E_i,E_j} \: : \: E \mapsto \Delta t$$
$$[\max(E_i, E_j), E_i + E_j] \to [0, T_{mort}]$$

La gamme d'énergie étant discrétisée, cette fonction inverse $F^{-1}{}_{EiEj}(E_k)$ est déterminée comme suit :

- pour $E_k$ compris dans l'intervalle [max($E_i$, $E_j$), $E_i$+$E_j$], $F^{-1}_{EiEj}$($E_k$ est la décalage temporel entre deux interactions d'énergies $E_i$ et $E_j$, décalage qui résulte en un empilement à l'énergie $E_k$,
- pour $E_k$ en dehors de l'intervalle [max($E_i$, $E_j$), $E_i$+$E_j$] : $F^{-1}_{EiEj}$($E_k$) = 0 ; aucun décalage temporel ne peut fournir une telle énergie, puisqu'elle est en dehors des valeurs possibles.

Compte tenu de la signification de la fonction F, donnée ci-dessus, cette fonction inverse $F^{-1}_{EiEj}$($E_k$) représente l'écart temporel entre deux interactions d'énergies respectives $E_i$ et $E_j$ tel que ces interactions soient considérées comme une interaction unique d'énergie $E_k$.

Cette fonction $F^{-1}_{EiEj}$ ($E_k$) peut-être choisie linéaire.

On peut maintenant procéder au calcul du spectre d'empilement élémentaire.

Calculons le spectre généré par les empilements entre les photons d'énergie $E_i$ et ceux d'énergie $E_j$.

Pour cela, l'intervalle d'énergies **[max($E_i$,$E_j$),$E_i$ +$E_j$]** est discrétisé en canaux d'énergies $E_k$ ayant chacun la largeur d'un canal du capteur spectrométrique, on a donc $\dfrac{E_i + E_j - \max(E_i, E_j)}{\Delta E}$ canaux , $\Delta E$ correspondant à la plage en énergie correspondant à chaque canal, cette plage étant ici supposée identique pour chacun des Nc canaux. Pour chaque valeur de k, l'intervalle de temps $\delta t_{i,j}$(k) associé au canal d'énergie $E_k$ est donné par l'équation :

$$\delta t_{i,j}(k) = F_{EiEj}^{-1}(E_{k+1}) - F_{EiEj}^{-1}(E_k)$$

Parmi l'ensemble des photons d'énergie $E_j$, noté $Sp_0$($E_j$), on peut estimer la probabilité qu'au moins l'un d'entre eux soit dans l'intervalle de temps compris entre $F^{-1}_{EiEj}$($E_k$) et $F^{-1}_{EiEj}$($E_{k+1}$) par rapport à un photon d'énergie i :

$$P_{i,j}(k) = 1 - \left[1 - 2 \times \delta t_{i,j}(k) / T_{expo}\right]^{Sp_0(E_i) \times Sp_0(E_j)}$$

$P_{i,j}$(k) est la contribution, à l'énergie $E_k$ de la fonction d'empilement, des photons d'énergie $E_i$ empilés avec ceux d'énergie $E_j$.

En d'autres termes, $P_{i,j}$(k) représente, pour chaque canal (k) correspondant à l'énergie Ek, la probabilité qu'un évènement compté dans ce canal corresponde à un empilement de deux interactions, séparées dans le temps d'une durée inférieure à $T_{mort}$, d'énergies respectives $E_i$ et $E_j$. $P_{i,j}$ sera appelé probabilité d'empilement et il y aura autant de probabilités d'empilement $P_{i,j}$ que de couples (i,j) avec 1≤1≤Nc et 1≤j≤Nc ou 1≤j≤Nc

Le spectre d'empilement Emp est ensuite estimé en sommant, pour chaque canal k, tout ou partie des probabilités d'empilement précédemment définies pour chaque couple i et j.

Ceci peut être réalisé de manière itérative par une boucle sur tout ou partie des couples ($E_i$,$E_j$). Si on note Nc le nombre de canaux d'énergies du capteur spectrométrique, le spectre résultant est la somme de Nc²/2 + Nc/2 spectres d'empilement élémentaires :

$$\mathrm{Emp(k)} = \sum_{i=1}^{Nc} \sum_{j=i}^{Nc} P_{i,j}(k)$$

Pratiquement on cherche à estimer le temps mort $T_{mort}$ et la fonction d'empilement à deux photons. Pour l'un comme pour l'autre, on peut procéder de diverses manières.

Le temps mort $T_{mort}$ peut d'abord être obtenu par :

- simulation des formes d'impulsion, en sortie de l'électronique analogique, après absorption d'une particule par le semi-conducteur 2 puis filtrage et traitement du signal émis par l'électronique analogique,
- puis estimation de la durée minimale séparant deux photons permettant de les séparer.

Selon ce premier procédé, l'influence du traitement numérique des impulsions sur le temps mort est négligée.

En variante on procède de manière expérimentale, par analyse du signal des impulsions.

Selon une première méthode expérimentale :

- On procède d'abord à la lecture du signal en sortie des moyens 4, 6 (électronique analogique), avant numérisation et construction des spectres,
- puis on estime la durée minimale séparant deux photons qui permette de les séparer.

Selon une deuxième méthode expérimentale, on procède par analyse de spectres :

- on estime d'abord le taux de comptage mesuré en fonction du flux incident (nombre de photons/s): différents spectres sont réalisés à des taux de comptage différents, en faisant varier l'intensité I du générateur de rayonnement 200. Le taux de comptage théorique est calculé en supposant qu'il est proportionnel à I. La valeur de référence est estimée pour le flux le plus bas, pour lequel on considère que le phénomène d'empilement est négligeable (typiquement une probabilité d'empilement pour un photon incident inférieure à 1%),
- on choisit ensuite un modèle pour le système, par exemple le modèle connu sous le nom de paralysable

$$f(n) = n e^{-n \times T_{mort}}$$

- ou selon le modèle connu sous le nom de non paralysable :

$$f(n) = \frac{n}{1 - n \times T_{mort}}$$

Ou tout autre fonction considérée comme pertinente par l'homme du métier.

Où n est le taux de comptage théorique, c'est-à-dite le taux de comptage en l'absence d'empilement.

On peut ensuite procéder au calcul du temps mort, par ajustement de f(n) aux données expérimentales de taux de comptage.

Certains dispositifs de traitement d'impulsions et de formation d'un spectre permettent également la détermination d'un temps mort. Cette grandeur pourra également être considérée comme étant un temps mort exploitable par l'invention.

La figure 10 illustre ce principe, l'ajustement étant alors réalisé selon un modèle paralysable, préféré par les inventeurs. Un ensemble de mesures (représentées par les points) en comptage est réalisé pour différentes valeurs de flux incident, ajustées par l'intermédiaire du courant I du tube X (en mA). La formule du taux de comptage pour un système paralysable est ensuite ajustée sur les données expérimentales en faisant varier le temps mort $T_{mort}$ du système. L'ajustement donne alors un temps mort de 58 ns.

En ce qui concerne la fonction d'empilement, on peut procéder à une estimation, par simulation des formes d'impulsion en sortie émises par le semi-conducteur 2 lors de l'absorption d'une particule et du filtrage de ce signal par l'électronique de traitement. On estime ensuite la fonction d'empilement en simulant la réponse du système lorsqu'il est soumis à deux impulsions correspondant à des $E_i$ et $E_j$, et en faisant varier l'écart temporel $\Delta t$ entre ces deux impulsions. On estime alors la fonction d'empilement $F_{E_i E_j}(\Delta t)$ correspondant à l'énergie E issue de l'empilement des deux impulsions d'énergie $E_i$ et $E_j$ en fonction l'écart temporel $\Delta t$ séparant ces deux interactions. Le traitement numérique des impulsions peut être négligé. Dans ce cas, cette simulation permet d'estimer la forme du signal analogique, correspondant à l'entrée du bloc 8 de la figure 1. On peut sinon procéder expérimentalement :

- par utilisation d'un générateur d'impulsions en entrée des moyens 4 ou 6 constituant respectivement le préamplificateur ou l'amplificateur de l'électronique analogique,
- par mesure de l'énergie $E_k$ produite par deux impulsions générées, correspondant aux énergies $E_i$ et $E_j$, en fonction de leur écart temporel $\Delta t$.

Enfin, une autre méthode est celle dite du « Modèle affine ». En effet l'énergie mesurée décroissant linéairement avec le décalage entre les instants d'interactions des deux photons, on peut faire l'hypothèse d'une fonction d'empilement à deux photons de type affine, qui relie linéairement l'énergie mesurée et le décalage temporel $\Delta t$. La validité de ce modèle a été vérifiée lors d'une étude expérimentale non décrite ici :

$$F_{E_i,E_j} : \quad \Delta t \mapsto \max(E_i, E_j) - \Delta t \times (E_i + E_j - \max(E_i, E_j))/T_{mort}$$

$$[0, T_{mort}] \rightarrow [\max(E_i, E_j), E_i + E_j]$$

L'inverse de la fonction d'empilement à deux photons, permettant d'associer à une énergie un intervalle de temps séparant les deux photons et notée $F^{-1}_{EiEj}$, se déduit alors par la formule :

$$F^{-1}_{E_i,E_j} : \quad E \mapsto \frac{E - \max(E_i, E_j)}{(E_i + E_j - \max(E_i, E_j))/T_{mort}}$$

$$[\max(E_i, E_j), E_i + E_j] \rightarrow [0, T_{mort}]$$

Ainsi, pour E(k) tel que max $(E_i, E_j) \leq E(k) \leq Ei + Ej$, $F^{-1}_{EiEj}(E_k)$ correspond au décalage temporel des deux interactions $E_i$ et $E_j$.

Pour une énergie E(k) telle que E(k) < max (Ei, Ej) ou E(k) > Ei + Ej, $F^{-1}_{EiEj}$ n'est pas définie.

Or, on l'a vu, l'intervalle de temps associé au canal d'énergies $E_k$ est donné par l'équation :

$$\delta t_{i,j}(k) = F_{EiEj}^{-1}(E_{k+1}) - F_{EiEj}^{-1}(E_k)$$

Selon l'hypothèse d'une fonction F affine, :

$$\delta t_{i,j}(k) = \frac{E_{k+1} - E_k}{(E_i + E_j - \max(E_i, E_j))/T_{mort}} \quad (1)$$

Si la plage en énergie $\Delta E_k$ de chaque canal k est constante et égale à $\Delta E$,

$$\delta t_{i,j}(k) = \frac{\Delta E}{(E_i + E_j - \max(E_i, E_j))/T_{mort}}$$

et est donc une constante pour i et j donnés : autrement dit, selon cette hypothèse, quel que soit k, $\delta t_{i,j}(k)$ ne dépend que de i et de j.

La fonction $\delta t_{i,j}(k)$ détermine la taille de l'intervalle d'écarts temporels $\Delta t$ séparant deux interactions d'énergie $E_i$ et $E_j$, dont l'empilement conduit à une valeur d'énergie détectée $E_k$. Lorsque l'écart temporel $\Delta t$ entre ces deux interactions est tel que :

$F^{-1}_{EiEj}(k) \leq \Delta t < F^{-1}_{EiEj}(k) + \delta t_{i,j}(k)$, l'empilement conduit à une énergie détectée égale à $E_k$.

Si l'écart temporel $\Delta t$ n'est pas compris dans l'intervalle défini par l'équation précédente, par exemple si $F^{-1}_{EiEj}(k) + \delta t_{i,j}(k) \leq \Delta t < F^{-1}_{EiEj}(k) + \delta t_{i,j}(k) + \delta t_{i,j}(k+1)$,
Ce qui peut s'écrire

$$F^{-1}_{EiEj}(k+1) \leq \Delta t < F^{-1}_{EiEj}(k+1) + \delta t_{i,j}(k+1)$$

alors l'empilement conduit à une énergie détectée égale à $E_{k+i}$.

On voit donc qu'il existe un intervalle, de largeur $\delta t_{i,j}(k)$, délimitant les écarts temporels $\Delta t$, tels que deux interactions d'énergies $E_i$ et $E_j$ séparées temporellement d'un écart $\Delta t$ inclus dans cet intervalle, sont empilées et considérées alors comme une seule interaction d'énergie $E_k$. On pourrait également désigner $\delta t_{i,j}(k)$ comme la largeur d'une fenêtre rassemblant les d'écarts temporels $\Delta t$, tels que deux interactions d'énergie $E_i$ et $E_j$ temporellement espacées de tels écarts sont considérées comme un empilement d'énergie $E_k$.

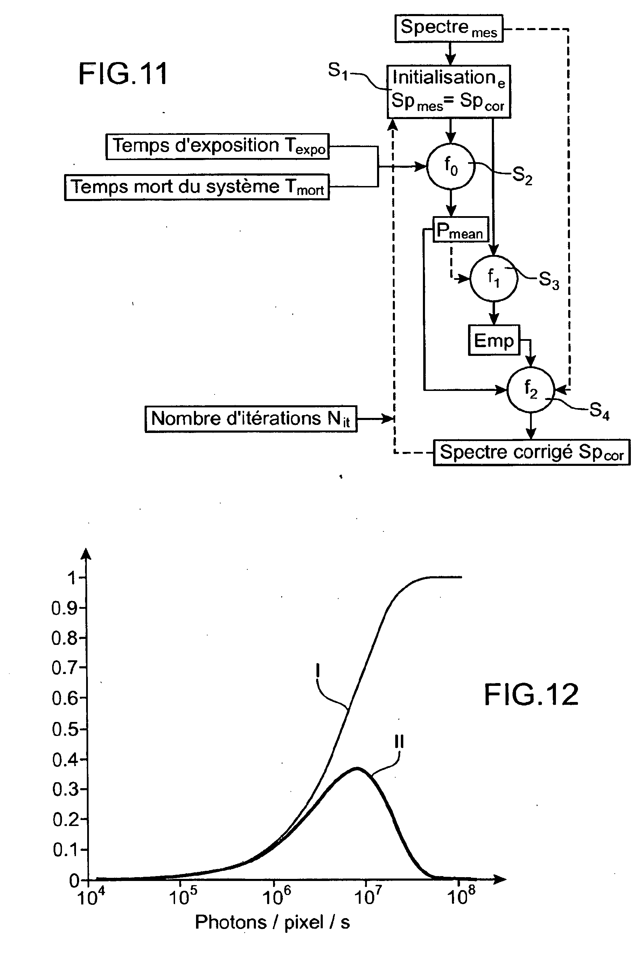

Un procédé de correction selon l'invention, qui utilise les éléments ($T_{mort}$, Emp, fonction d'empilement) va maintenant être expliqué, en liaison avec la figure 11.

Ce procédé permet de déduire d'une mesure de spectre $Sp_{mes}$, dégradée par le phénomène d'empilements, un spectre corrigé $Sp_{cor}$.

Mais le spectre incident $Sp_0$ est généralement inconnu, et il est alors impossible d'estimer la probabilité d'empilement $P_{mean}$, les probabilités d'empilement $P_{i,j}$ ou le spectre d'empilement Emp selon les expressions précédemment décrites. Aussi, la correction des empilements est basée sur une estimation itérative de la probabilité moyenne d'empilement $P_{mean}$, des probabilités d'empilement Pi,j et du spectre d'empilement Emp, par exemple selon les expressions

$$P_{mean} = 1-(1-P_0)^{N-1}$$

Avec

$$N = \sum_E Sp'_{cor}(E)$$

$$P_{i,j}(k) = 1 - \left[1 - 2 \times \delta t_{i,j}(k)/T_{expo}\right]^{Sp_{cor}(E_I) \times Sp_{cor}(E_J)}$$

Et

$$\text{Emp}(k) = \sum_{i=1}^{Nc} \sum_{j=i}^{Nc} P_{i,j}(k)$$

Si le procédé de correction est itératif, $Sp_{cor}$ sera considéré comme établi à partir du spectre mesuré $Sp_{mes}$ lors de la première itération ; mais, lors des itérations suivantes, un spectre corrigé $Sp_{cor(n)}$ sera établi à partir du spectre corrigé $Sp_{cor(n-1)}$ obtenu lors de l'itération précédente (0 suppose $1 \leq n \leq N_{it}$, où $N_{it}$ est le nombre d'itérations). Par exemple, le spectre $Sp_{cor}$ peut être égal au spectre $Sp_{mes}$ lors de la première itération et, lors des itérations successives, $Sp_{cor}$ peut être égal au spectre corrigé lors de l'itération précédente.

S'il n'y a qu'une seule itération, $Sp_{cor}$ est établi à partir du spectre mesuré $Sp_{mes}$, par exemple $Sp_{cor} = Sp_{mes}$.

Ce procédé comporte 4 variables d'entrée :

- le spectre à corriger $Sp_{mes}$ (j), qui est en fait un vecteur colonne de dimension Nombre de canaux ($N_C$)×1.

Ce spectre (numérisé) a été obtenu par mesure à l'aide par exemple du dispositif de la figure 1A ou 1B ou de l'une des figures 15-20

- Le temps d'intégration $T_{expo}$. C'est un nombre réel donné en ms, et c'est une donnée physique du système, en fonction de la source de rayonnement utilisée.
- Le temps mort du système capteur - électronique $T_{mort}$. C'est un nombre réel donné en ms. On a expliqué comment on peut le mesurer ou l'estimer.
- Le nombre d'itérations pour la correction des empilements, réalisée donc de manière itérative, $N_{it}$. Ce nombre est par exemple choisi par un opérateur du système de traitement de données. Ce nombre peut ne pas être prédéterminé. Le procédé sera alors arrêté par l'opérateur, ou selon un critère de convergence, en comparant deux spectres corrigés au cours de deux itérations successives.

En sortie, ce procédé fournit un spectre corrigé en empilements, $Sp_{cor}$, également un vecteur de dimension $N_C$×1.

Ce procédé comporte d'abord (étape S1) une initialisation du spectre corrigé à partir du spectre mesuré, par exemple : $Sp_{cor}(0) = Sp_{mes}$. Autrement dit, lors de l'initialisation, le spectre mesuré est identifié au spectre corrigé.

Selon un mode de réalisation, une correction itérative est ensuite réalisée $N_{it}$ fois. A chaque itération, sont réalisées les étapes suivantes :

- un calcul de la probabilité moyenne d'empilements (fonction $f_0$ (étape S2),
- une estimation du spectre d'empilement (fonction $f_1$ (étape S3),
- une correction des empilements (fonction $f_2$) (étape S4) pour fournir un spectre corrigé $Sp_{cor}$.

L'étape S2 permet, à partir de 3 paramètres d'entrée: $Sp_{cor}$ (n-1) (qui est un vecteur, initialisé comme indiqué ci dessus); $T_{mort}$ (nombre réel) ; $T_{expo}$ (nombre réel), de fournir un nombre réel P, par un calcul en une étape :

$$P_{mean} = 1 - \left(1 - 2 \times \frac{T_{mort}}{T_{expo}}\right)^{\sum_{j=1}^{Nc} Sp_{cor}(j)}$$

Ou, de façon plus rigoureuse :

$$P_{mean} = 1 - \left(1 - 2 \times \frac{T_{mort}}{T_{expo}}\right)^{\sum_{j=1}^{Nc} Sp_{cor}(j) - 1}$$

A partir des deux paramètres que sont $Sp_{cor(n-1)}$ (vecteur) et des fonctions d'empilement $P_{ij}$, déterminées à l'aide des fonctions de largeur d'intervalles d'écarts temporels $\delta t_{ij}$ précédemment définis , l'étape S3 permet de fournir une sortie: Emp (qui est un vecteur), par un calcul lui aussi en une étape :

$$Emp(k) = \sum_{i=1}^{Nc} \sum_{j=i}^{Nc} P_{i,j}(k)$$

Avec :

$$P_{i,j}(k) = 1 - \left[1 - 2 \times \delta t_{i,j}(k)/T_{expo}\right]^{Spcor_{(n-1)}(E_i) \times Spcor_{(n-1)}(E_j)}$$

$Sp_{cor(n-1)}$ a déjà été définie ci-dessus et $\delta_{i,j}(k)$ est la fonction qui a été présentée précédemment, et qui peut être calculée suivant l'une des méthodes déjà exposées, et préférentiellement par l'équation (1).

La correction des empilements (étape S4) est réalisée à partir du vecteur $Sp_{mes}$ (ou $Sp_{cor(n-1)}$ si il ya eu plus d'une itération), du nombre réel P et du vecteur Emp déterminé en S3. Elle résulte en une sortie $Sp_{cor(n)}$. Le calcul est à une étape :

$$Sp_{cor(n)} = \frac{Sp_{cor(n-1)} - Emp}{1 - P_{mean}}$$

L'étape S4 permet donc de soustraire du spectre mesuré le spectre d'empilement. Elle peut comporter une division par un facteur dépendant de la probabilité moyenne d'empilement $P_{mean}$ du spectre corrigé $Sp_{cor}$, ce facteur peut être égal à 1 - $P_{mean}$. Si cette division n'est pas effectuée, l'allure du spectre sera conservée, mais l'intégrale sera conservée.

Si $N_{it}$ itérations ont été réalisées, le procédé s'arrête et le dernier spectre $Sp_{cor(Nit)}$ obtenu est considéré comme le spectre corrigé souhaité. Sinon, on recommence le procédé en prenant comme spectre de départ le dernier spectre $Sp_{cor(n-1)}$ obtenu.

A chaque itération, on effectue les calculs, notamment de $P_{i,j}(k)$ et Emp(k), en fonction du spectre corrigé obtenu lors de l'itération précédente (sauf la première itération où $P_{i,j}(k)$ et Emp(k) sont calculés en fonction du spectre mesuré).

Plus le nombre $N_{it}$ est élevé, plus précis est le résultat. Selon les résultats expérimentaux obtenus, ce nombre est compris entre 1 et 100, préférentiellement entre 2 et 10.

Le processus d'estimation de la fonction d'empilement est basé sur l'hypothèse que les empilements à deux photons sont majoritaires devant les empilements à trois photons ou plus. Cette hypothèse est justifiée surtout pour de faibles flux (faible taux d'empilement).

Pour un photon incident, la probabilité d'empilement avec un photon et un seul peut s'écrire :

$$P_2 = P_0 \times (1 - P_0)^n \times n$$

Rappelons que la probabilité moyenne d'empilement peut s'écrire :

$$P_{mean} = 1 - (1 - P_0)^{N-1}$$

Prenons l'exemple d'un système couplant un capteur de photons suivi d'une électronique de traitement dont le temps mort global, à savoir l'intervalle de temps minimal séparant 2 photons absorbés dans le capteur pour les mesurer, est de 62 ns.

La figure 12 illustre les variations de P et de $P_2$, définies ci-dessus, en fonction du flux incident, exprimé en nombre de photons par pixel et par seconde.

La probabilité d'empilement à deux photons (courbe II) est une fonction croissante du flux pour les faibles valeurs de ce dernier.

Elle atteint ensuite un maximum avant de tendre vers 0 pour des flux très importants, supérieurs à $5 \times 10^7$ photons/pixel/s.

La probabilité d'empilement P (courbe I) est par contre une fonction croissante du flux. Dans la zone à fort flux, cette probabilité d'empilement tend vers 1 et l'ensemble des empilements sont des empilements à plus de deux photons.

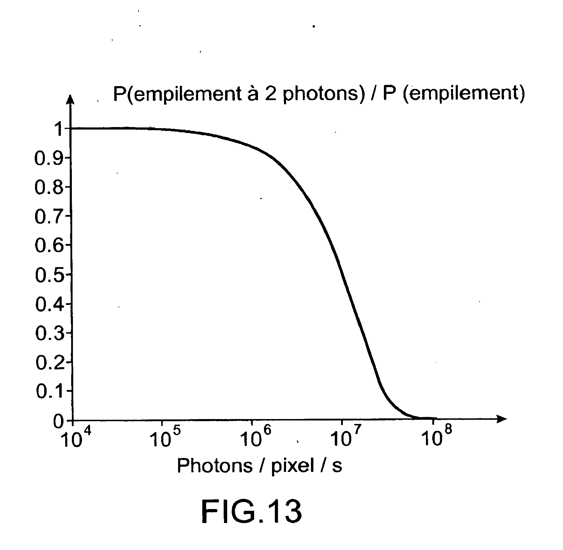

La figure 13 montre le rapport de la probabilité d'empilement à deux photons sur la probabilité d'empilement totale.

Cette courbe montre que l'hypothèse est juste à 1% près dans la gamme [0 -$5 \times 10^5$ photons/pixel/s].

Elle reste vraie à 7% près pour un flux de $1 \times 10^6$ photons/pixel/s.

On peut remarquer que la gamme de flux sur laquelle l'hypothèse d'empilements à deux photons est juste est d'autant plus étendue que le temps mort du système est faible.

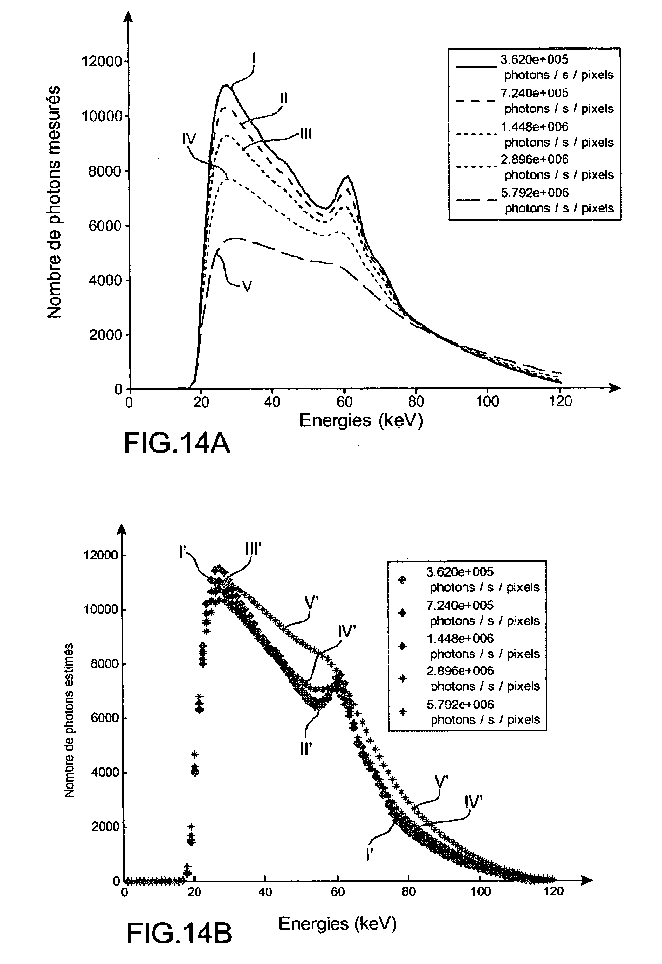

Les figures 14A - 14B illustrent les performances du procédé de correction des empilements selon l'invention, en spectrométrie rapide.

La figure 14A montre les spectres mesurés pour différents flux de photons :

- courbe I : $3{,}62 \times 10^5$ photons/s/pixel,
- courbe II : $7{,}24 \times 10^5$ photons/s/pixel,
- courbe III : $1{,}448 \times 10^6$ photons/s/pixel,
- courbe IV : $2{,}896 \times 10^6$ photons/s/pixel,
- courbe V : $5{,}792 \times 10^6$ photons/s/pixel,

La figure 14B montre les mêmes spectres après correction (le spectre I' étant le spectre corrigé du spectre I,...etc) en 3 itérations.

Ces figures montrent une bonne correction jusqu'à environ $3 \times 10^6$ photons/s/pixel et une dégradation du spectre corrigé acquis avec un flux d'environ $6 \times 10^6$ photons/s/pixel, bien que le résultat reste encore acceptable.

Le calibrage complet est relativement simple. Il peut être réalisé par une série de mesures de plein flux pour différentes intensités du générateur X.

Dans la réalisation particulière de l'invention décrite ci dessus, la détermination des fonctions d'empilement à deux photons ne nécessite pas de calibrage supplémentaire, elle peut être basée sur un modèle basé sur la seule connaissance du temps mort.

L'invention propose donc un procédé de correction rapide qui présente l'intérêt de n'avoir en entrée que les seules données du spectre $Sp_{mes}$ ainsi que les données de $T_{expo}$ et de $T_{mort}$. Ceci permet donc de réduire la quantité d'information à transmettre aux moyens réalisant le traitement des données.

Un tel procédé de correction de spectre peut être mis en oeuvre par les moyens 12 déjà décrits ci-dessus.

Ces moyens sont alors programmés pour mémoriser et traiter des données de spectre et des données pour mettre en oeuvre un procédé selon l'invention, par exemple les données $T_{expo}$ et $T_{mort}$.

L'unité centrale 16 peut ainsi être programmée pour calculer un spectre d'empilement, par exemple par un procédé itératif tel que décrit ci dessous en liaison avec la figure 11, et effectuer le calcul ou l'estimation d'un spectre corrigé ($Sp_{cor}$) par différence entre des données mémorisées de spectre mesuré ($Sp_{mes}$) et des données mémorisées de spectre d'empilement (Emp).

Ces moyens 12 permettent également de réaliser une estimation du temps mort $T_{mort}$ et/ou de la fonction d'empilement ou de sa fonction inverse $\delta t_{i,j}(k)$, de manière expérimentale ou par modélisation, comme expliqué ci-dessus.

A l'aide des moyens 12, un opérateur peut sélectionner un ou plusieurs paramètres pour réaliser ces opérations.

Il peut notamment sélectionner un nombre d'itérations $N_{it}$ pour réaliser un processus itératif selon l'invention.

Sur l'écran ou les moyens 17 de visualisation on peut afficher un spectre mesuré $Sp_{mes}$ ainsi qu'un spectre corrigé $Sp_{cor}$ selon la présente invention et éventuellement un spectre d'empilement Emp. Un opérateur peut choisir, par exemple à l'aide d'un menu déroulant, un nombre d'itérations à réaliser pour un traitement selon l'invention.

On décrit maintenant plusieurs circuits pouvant être utilisés dans le cadre de l'invention afin, là encore, de traiter le problème des empilements tel qu'expliqué ci-dessus.

Un tel dispositif autorise avantageusement des mesures spectrométriques à flux élevé, il permet en effet d'extraire les valeurs utilisées pour la construction du spectre même en présence de nombreux empilements d'impulsions mises en forme par la ligne à retard. Il est avantageusement combiné avec le procédé décrit ci-dessus en liaison avec les figures 8 - 14.

La figure 15 représente un tel dispositif de détection de spectrométrie de rayonnement électromagnétique ionisant. Sur cette figure, les références 1 et 100 ont la même signification que sur la figure 1A. Ce dispositif comporte le détecteur 2, (par exemple du type déjà décrit ci-dessus) symbolisé par un bloc de matériau semi-conducteur M et une résistance R qui relie le bloc M à une haute tension HT. Le circuit électronique de proximité 2 est un préamplificateur de charges qui comprend une capacité C1, un amplificateur A1 une capacité C2 et une résistance Rp. La capacité C1 est montée en entrée de l'amplificateur A1 et la capacité C2 et la résistance Rp sont montées en série entre l'entrée et la sortie de l'amplificateur A1.

Lors de la détection d'une interaction d'un photon dans un détecteur, pendant le temps de présence du courant détecteur i(t) délivré par le détecteur 1, la tension $V_{OUT}(t)$ en sortie du préamplificateur de charges est :

$$V_{OUT} = -\frac{1}{C2}\int i\, dt \; ,$$

soit

$$V_{OUT} = -\frac{Q}{C2}$$

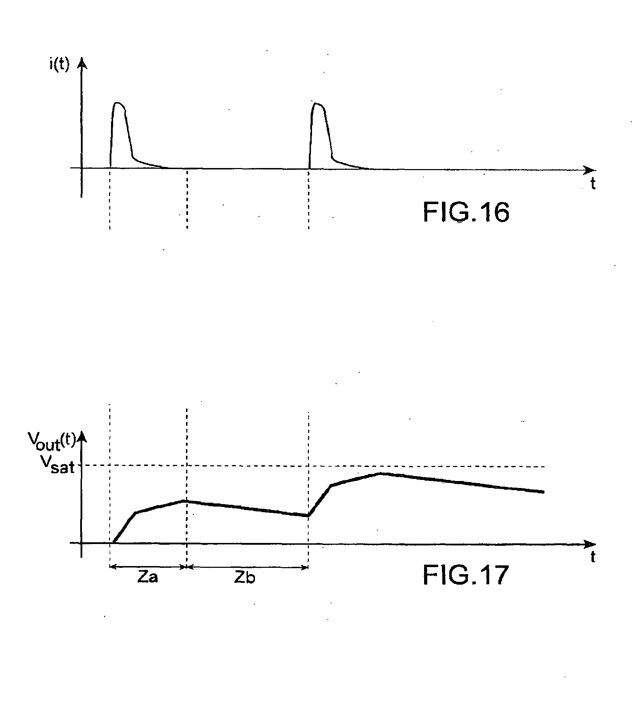

où Q est la quantité de charges émise par le photon qui interagit dans le matériau semi-conducteur M (cf. zone temporelle Za sur la figure 17).

En sortie du préamplificateur de charges, l'information qui correspond à l'énergie du photon est fugitive car le préamplificateur se décharge.

Il faut donc sauvegarder cette tension au plus vite après la disparition du courant détecteur (cf. zone temporelle Zb sur la figure 17). Parallèlement, la relaxation du préamplificateur de charges permet de faire face à de forts taux de comptage car la tension en sortie de celui-ci s'accumule et, sans relaxation, le préamplificateur serait vite saturé (cf. la tension de saturation $V_{sat}$ sur la figure 17).

La tension $V_{OUT}(t)$ délivrée par le circuit électronique 82 est la tension d'entrée d'un circuit électronique de traitement 83.

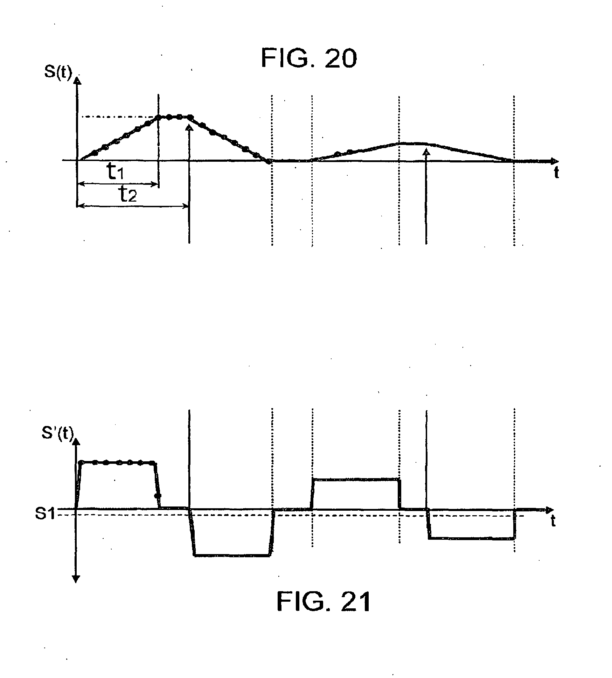

Le circuit 82 délivre la tension E(t) (figure 10). E(t) est ensuite numérisé par l'ADC afin de donner un signal numérisé, qui correspond aux points visibles sur la figure 20.

Naturellement, l'invention peut s'appliquer à tout autre circuit électronique de traitement 83, apte à délivrer une impulsion analogique dont l'amplitude est proportionnelle à l'énergie déposée par une interaction dans le détecteur, tels que, par exemple, un détecteur de crête ou un intégrateur actif commuté, tels que ceux mentionnés précédemment dans l'art antérieur.

Cela dit, le circuit électronique de traitement 83 décrit ci-dessous correspond à un mode préféré.

La sortie du préamplificateur de charges 82 est directement reliée à un ensemble constitué d'une ligne à retard Lr, d'un atténuateur Att (gain inférieur à 1), d'un soustracteur D, d'un amplificateur A2 et d'un circuit de conversion analogique/numérique ADC. La ligne à retard Lr est montée en série avec l'atténuateur Att et forme un bloc de retard et de transmission dont une première borne est reliée à la sortie du préamplificateur et la deuxième borne est reliée à une première entrée du soustracteur D dont la deuxième entrée est directement reliée à la sortie du préamplificateur.

Le signal $V_{OUT}(t)$ issu du préamplificateur est retardé à travers la ligne à retard Lr dont le délai est supérieur au temps de montée du signal $V_{OUT}(t)$. Le soustracteur D soustrait la tension $V_{OUT}(T)$ retardée et atténuée à la tension $V_{OUT}(T)$ et le signal qui résulte de cette soustraction est amplifié par l'amplificateur A2 qui délivre alors, via l'amplificateur A2, une impulsion analogique E(t) dont la hauteur est proportionnelle à l'énergie déposée par le photon détecté.

La numérisation qu'effectue le convertisseur analogique/numérique ADC 34 est effectuée en permanence, le calculateur étant programmé pour repérer les valeurs d'énergie supérieures à un seuil d'énergie prédéterminée $E_s$. Le résultat de cette numérisation apparaît sur la figure 20 : chaque impulsion analogique est remplacée par une impulsion de signal numérisé, laquelle rassemble une série de signaux numériques S(t), représentés par des points sur la figure 20. Ainsi, une impulsion numérisés rassemble l'ensemble des signaux numériques S(t) produits par le traitement de l'impulsion analogique E(t) par le convertisseur analogique numérique

Le dispositif comprend en outre un circuit 85 qui opère un traitement des signaux numériques S(t) délivrés par le convertisseur analogique/numérique ADC.

La figure 18 représente explicitement les unités de traitement du circuit 85 qui opèrent dans le cadre de l'invention.

La figure 19 représente un perfectionnement du circuit de la figure 18.

Le circuit 85 peut être, par exemple, un microprocesseur, ou un circuit logique programmable (FPGA en langue anglaise pour « Field Programmable Gate Array »), ou un circuit intégré spécifique (circuit ASIC pour « Application Specific Integrated Circuit »).

Selon le mode de réalisation préférentiel de l'invention, le circuit qui délivre une impulsion utilise une ligne à retard, ce qui permet avantageusement d'obtenir une impulsion dont les caractéristiques temporelles (temps de montée, temps de descente) sont proches de l'impulsion collectée par l'électrode du détecteur.

L'utilisation d'un circuit à ligne à retard permet ainsi d'obtenir une information temporelle précise.

La figure 18 représente les unités de traitement du circuit 85. Le calculateur 85 comprend une unité 86 de lecture du signal numérisé S(t) délivré par le convertisseur analogique/numérique ADC, une unité 87 de calcul du taux de variation temporelle S'(t) entre deux signaux numériques successifs $S_L(t)$ lue, une unité 88 de comparaison du taux de variation temporelle S'(t) délivré par l'unité 87 avec un seuil de variation S1 prédéterminé et une unité 89 de décision de capture ou de non capture du signal numérique lu.

L'unité 86 de lecture lit le signal S(t) numérisé délivré par le convertisseur analogique/numérique ADC à une fréquence de lecture $f_L$ de préférence égale à la fréquence d'échantillonnage du convertisseur analogique numérique ADC, l'unité de lecture et le convertisseur analogique numérique étant alors synchronisé par la même horloge. La figure 21 représente un exemple de signaux numériques délivrés par le convertisseur analogique/numérique ADC, formant une discrétisation des impulsions analogiques E(t), cette discrétisation générant des impulsions de signaux numérisés.

Le signal délivré par le convertisseur analogique/numérique ADC est numérisé en permanence, par exemple à une fréquence élevée comprise entre 1MHz et 1GHz (typiquement quelques centaines de MHz). Le temps $\tau 1$ indiqué sur la figure 21 correspond au temps de montée de l'impulsion analogique (temps de transit des charges dans le détecteur) et le temps $\tau 2$ correspond à la durée entre le début de l'impulsion analogique et sa décroissance ($\tau 2$ peut ainsi correspondre au temps mort du système de spectrométrie utilisé).

L'unité 86 de lecture délivre un signal numérique lu $S(t)_L$. L'unité 87 de calcul de taux de variation temporelle détermine alors le taux de variation S'(t) sous la forme de l'équation (1) ci-dessous :

```
S'(t) = [S(t)_L-S(t-dt)_L]/dt (1)
```

Ainsi, un taux de variation S'(t) peut être calculé à chaque nouvelle impulsion lue $S_L(t)$, c'est-à-dire à la fréquence de lecture, généralement égale à la fréquence d'échantillonnage du convertisseur analogique numérique.

La figure 21 illustre, à titre d'exemple, le signal numérique délivré par l'unité de calcul de taux de variation temporelle lorsque le signal numérique délivré par le convertisseur ADC est conforme au signal représenté en figure 13.

Le taux de variation S'(t) délivré par l'unité 87 est comparé au seuil S1 par l'unité de comparaison 88.

Lors de chaque impulsion de signal numérisé lu $S_L(t)$, le signal S'(t) décrit successivement une première partie, correspondant à la croissance en amplitude des signaux $S_L(t)$, et une seconde partie, correspondant à la décroissance en amplitude des signaux numérisés lus $S_L(t)$.

Dans le cas présent, la première partie peut-être appelée partie positive, puisqu'elle correspond à des valeurs positives de S'(t). De façon analogue, la seconde partie peut-être appelée partie négative, puisqu'elle correspond à des valeurs négatives de $S_L(t)$.

Le seuil S1 est généralement placé à une valeur négative prédéterminée.

La valeur absolue du seuil S1 est choisie de sorte que qu'elle soit supérieur à l'amplitude du bruit BS'(t) affectant le taux de variation S'(t). En effet, les valeurs du taux de variation S'(t) sont affectées de fluctuations haute fréquence, pouvant être de l'ordre de la fréquence d'échantillonnage, dues au bruit $BS_L(t)$ affectant le signal numérique 1u $S_L(t)$. Le bruit BS'(t) est généralement de valeur moyenne nulle. Le seuil S1 est placé à une valeur négative, de sorte que S1, en valeur absolue, soit supérieur à l'amplitude maximale du bruit BS'(t), mais également de sorte que la valeur absolue de S1 est suffisamment faible afin que lorsque S'(t) atteint ce seuil, le signal $S_L(t)$ corresponde sensiblement à un maximum local, c'est-à-dire soit le plus proche possible due sommet d'une impulsion comme on peut le voir sur les figures 22A et 22B. Par le plus proche possible, on entend quelques périodes dt de l'horloge de synchronisation. L'étape d'ajustement du seuil S1 est réalisée expérimentalement et peut-être renouvelée, de telle sorte que la valeur du seuil S1 puisse être rafraîchie.

Le signal de comparaison délivré par l'unité de comparaison 88 commande l'unité de décision 89. Si le seuil S1 n'est pas franchi (i.e. S1 ≤ S'(t)), le signal de comparaison commande l'unité de décision de telle sorte que le dernier signal numérique lu ne soit pas capturé. Si le seuil est franchi, i.e. S'(t) ≤ S1, le signal de comparaison commande l'unité de décision de sorte que la dernière impulsion $S_L(t)$ lue soit capturée.

Une fois la capture effectuée ou non, un nouveau signal numérique est lu.

La première partie (ou partie positive) du signal S'(t) correspond à l'image de l'impulsion de courant photonique obtenu par l'interaction d'un photon dans le détecteur.

La seconde partie (ou partie négative) du signal S'(t) est utilisée pour la synchronisation : lorsque cette partie négative est franchit le seuil S1, la valeur correspondante du signal $S_L(t_0)$ est retenue pour la formation du spectre, $t_0$ correspondant à l'instant auquel $S'(t_0)$ passe en dessous du seuil S1. Ainsi, $t_0$ est tel que à $t_0 - \delta t$, $S'(t_0 - dt) > S1$ et qu'à $t_0$, $S'(t_0) \leq S1$, dt étant la période de l'horloge de synchronisation du circuit de lecture

De façon avantageuse, le dispositif de l'invention présente une meilleur discrimination des interactions coïncidentes que la discrimination qui est obtenue par les circuits de l'art antérieur. Le fait de travailler sur la variation temporelle du signal présent en aval de la ligne à retard comporte un avantage par rapport au fait de travailler sur la variation temporelle du signal présent en amont de cette ligne. En effet, on bénéficie alors de l'effet de filtrage de la ligne à retard, le rapport signal sur bruit du signal présent en sortie de la ligne à retard étant meilleur que celui existant en entrée de la ligne.

L'information temporelle obtenue est plus précise.

La figure 19 représente un perfectionnement du circuit représenté en figure 18. Selon ce perfectionnement, le dispositif comprend des moyens aptes à déterminer une durée de la partie positive du signal S'(t). En effet, lorsque S'(t) atteint la valeur S1, mais que la partie positive de S'(t) dépasse une durée prédéterminée Tm, la capture n'est pas réalisée. Par partie positive de S'(t), on entend l'ensemble des signaux S'(t) déterminés durant la croissance en amplitude des signaux $S_L(t)$ au cours de le même impulsion analogique numérisée.

Outre les circuits 86, 87, 88 et 89 mentionnés précédemment, le circuit 5 comprend une unité de comparaison de signal 90, une unité de comptage de durée de la partie positive de S'(t) 91 et une unité de comparaison de durée de cette partie positive 92. Le signal S'(t) est tout d'abord comparé avec une valeur de seuil S2. La valeur de seuil S2 est choisie de sorte qu'elle soit de signe opposé à S1, et que sa valeur absolue soit supérieure à l'amplitude maximum du bruit BS'(t). Elle peut être de valeur opposée à S1, c'est-à-dire de même valeur absolue, mais de signe opposé. Lorsque le signal S'(t) est supérieur à S2, le comparateur 40 délivre un signal qui commande le comptage de la durée d'impulsion $T_{imp}$, sinon il n'y a pas de comptage.

Il y a incrémentation du compteur de durée d'impulsion à chaque valeur numérique lue S'(t) jusqu'à ce qu'un signal S'(t) redevienne inférieur à S2, ce qui arrête le comptage de la durée d'impulsion $T_{imp}$

La durée $T_{imp}$ de la partie positive de l'impulsion S'(t) délivrée par l'unité de comptage 11 est alors comparée à une valeur de seuil de durée $T_m$. La durée $T_m$ est préférentiellement choisie comme étant le temps de montée du signal pris en sortie du préamplificateur de charges. Si la durée d'impulsion $T_{imp}$ est supérieure à $T_m$, le signal délivré par le comparateur 82 commande l'unité de décision 89 pour ne pas capturer le signal $S_L(t_0)$, correspondant à l'instant $t_0$ auquel S'(t) franchit du seuil S1.

Si la durée d'impulsion $T_{imp}$ est inférieure ou égale à $T_m$, le signal $S_L(t_0)$ correspondant à l'instant $t_0$ tel que $S'(t_0) \leq S1$, et $S'(t_0 - dt) > S1$, $\delta t$ étant la période de l'horloge de synchronisation du circuit de lecture est pris en compte.

Le dispositif de l'invention autorise avantageusement des mesures spectrométriques à flux élevé ; il permet en effet d'extraire les valeurs utilisées pour la construction du spectre même en présence de nombreux empilements d'impulsions mises en forme par la ligne à retard. Les figures 22A et 22B illustrent cet avantage de l'invention. La figure 22A représente des impulsions de tension obtenues en présence de nombreux empilements et la figure 22B représente les variations temporelles des empilements de tension représentés en figure 22A.

Le franchissement du seuil S1 par les variations temporelles de signal (cf. figure 22B) donne un repère temporel pour déclencher une sauvegarde dans le spectre du signal. Dès que la variation temporelle est inférieure au seuil S1 (cf. figure 22B), la valeur correspondante du signal (cf. figure 22A) est repérée et sauvegardée pour le montage du spectre.

Contrairement aux méthodes de l'art antérieur, il est alors toujours possible d'extraire des mesures correctes, même en cas de superposition des impulsions.

Le dispositif de l'invention permet ainsi de pousser les performances de systèmes de mise en forme d'impulsions au maximum de leurs performances en taux de comptage.

Les figures 23A et 23B illustrent les avantages qui résultent du perfectionnement du dispositif de l'invention représenté en figure 19.

Dans le cas où la durée de la partie positive de la variation temporelle du signal est plus longue que le temps de référence $T_m$, c'est qu'il y a empilement. La valeur de l'énergie détectée, correspondant au signal $S_L(t)$ capturé, est alors fausse et il ne faut pas la faire apparaître dans le spectre d'énergie.

Les figures 23A et 23B illustrent le cas où deux photons interagissent dans le détecteur dans un temps très court. La variation temporelle du signal ne franchit alors pas le seuil S1 et la durée de la partie positive de la variation temporelle est supérieure à $T_m$. Les deux photons ne sont pas donc retenus pour le spectre.

Le temps mort du dispositif à ligne à retard de l'invention est le temps nécessaire pour mesurer l'énergie d'un photon qui interagit dans le détecteur, c'est-à-dire le délai $T_d$ imposé par la ligne à retard. Une condition à respecter dans le dispositif de l'invention est alors que le délai $T_d$ soit supérieur ou égal à la durée $T_m$.

L'invention concerne notamment le domaine des techniques d'analyse de matériaux, par exemple pour identifier un produit tel qu'un explosif, dans un bagage d'un voyageur, à partir de l'analyse de la fonction de transmission du rayonnement X de ce bagage. Elle concerne donc également un procédé pour identifier la nature d'un matériau dans un bagage, ou pour investiguer le contenu d'un bagage, comportant le positionnement d'un bagage sur le trajet d'un faisceau tel que le faisceau 200 et la détection du rayonnement transmis à l'aide du dispositif de la figure 1A par exemple. Ensuite, la mise en oeuvre d'un procédé selon l'invention permet d'identifier la présence éventuelle d'explosif dans le bagage. Elle a donc des applications dans les systèmes mis en oeuvre dans les aéroports pour identifier des matières explosives dans les bagages.

De préférence, dans un procédé ou un dispositif tel que décrit ci-dessus :

- le flux de photons incident sur le matériau est au moins égal à $10^7$ mm$^{-2}$s$^{-1}$;
- et/ou le nombre de spectres de rayonnement réalisés est compris entre 1 et 100.

**Revendications**

1. Procédé de caractérisation de la nature d'un matériau, comportant :

   - disposer au moins un échantillon (100) de ce matériau entre une source (1) de rayons X, et un détecteur (2),
   - réaliser, à l'aide de la source (1) de rayons X, au moins un spectre de rayonnement X transmis à travers ledit matériau, chacun pendant une durée $\Delta t$,
   - calculer la fonction de transmission de ce matériau en fonction de l'énergie ou du canal de détection, à partir d'au moins un desdits spectres,
   - sélectionner N bandes d'énergie, N étant supérieur ou égal à 2,
   - dans chacune des bandes d'énergies, déterminer un coefficient de transmission $\alpha i$ correspondant à une grandeur statistique de la fonction de transmission dans cette bande d'énergie,
   - déterminer la nature dudit matériau à l'aide desdits coefficients, par comparaison des coefficients de transmission ($\alpha_1...\alpha_N$) avec des coefficients de transmission étalons ($\alpha_{matériau-étalon1}, ...\alpha_{matériau-étalonN}$).

2. Procédé selon la revendication 1, la grandeur statistique étant une intégrale de la fonction de transmission ou une moyenne.

3. Procédé selon l'une des revendications 1 à 2, N étant égal à 2, le procédé comportant alors :

   - la sélection d'une première zone d'énergie, appelée zone basse énergie, et d'une deuxième zone d'énergie, appelée zone haute énergie,
   - le calcul de l'intégrale de la fonction de transmission, par rapport à l'énergie, formant ainsi au moins un premier coefficient ($\alpha1$) de transmission et un deuxième coefficient ($\alpha2$) de transmission.

**4.** Procédé selon l'une des revendications 1 à 3, la durée $\Delta t$ étant comprise entre 1 ms et 10 ms.

**5.** Procédé selon l'une des revendications 1 à 4, la détermination de la nature dudit matériau à l'aide des coefficients de transmission étant réalisée par positionnement des coefficients calculés dans un plan comportant des coefficients de matériaux connus en fonction de leur épaisseur.

**6.** Procédé selon l'une des revendications 1 à 5, la comparaison des coefficients de transmission ($\alpha_1$-$\alpha_n$) avec des coefficients de transmission étalons ($\alpha_{\text{matériau-étalon1}}, \cdots \alpha_{\text{matériau-étalon}}N$) comportant une mesure de la distance entre un Nuplet ($\alpha_1, \alpha_2, ..\alpha N$) et chaque Nuplet étalon ($\alpha_{\text{imatériau-étalon}}, ...\alpha_N\text{matériau étalon}$) de chaque matériau étalon, la nature et l'épaisseur du matériau examiné correspondent alors à la nature et à l'épaisseur du matériau étalon représenté par le Nuplet étalon dont les coordonnées sont les plus proches.

**7.** Procédé selon l'une des revendications 1 à 6, comportant en outre une étape de correction des spectres pour les perturbations résultant des phénomènes d'empilement.

**8.** Dispositif de caractérisation de la nature d'un échantillon de matériau, comportant :

- une source (1) de rayons X,
- un détecteur (2),
- des moyens (4, 6, 8, 10, 12, 20, 22, 52, 82, 83, 84, 85) pour réaliser, à l'aide de la source de rayons X, au moins un spectre de rayonnement X transmis à travers ce matériau, chacun pendant une durée $\Delta t$,
- des moyens (12, 16) pour calculer la fonction de transmission de ce matériau en fonction de l'énergie ou du canal de détection,
- des moyens pour sélectionner N bandes d'énergie, N étant supérieur ou égal à 2,
- des moyens (12, 16) pour calculer dans chacune des bandes d'énergie, au moins un coefficient ($\alpha_1$) de transmission chaque coefficient correspondant à une grandeur statistique de la fonction de transmission dans cette bande d'énergie,
- des moyens (12, 16) pour déterminer la nature dudit matériau à l'aide desdits coefficients, par comparaison des coefficients de transmission ($\alpha_1...\alpha_N$) avec des coefficients de transmission étalons ($\alpha_{\text{matériau-étalon1}}, \cdots \alpha_{\text{matériau-étalon}}N$).

**9.** Dispositif selon la revendication 8, la grandeur statistique étant une intégrale de la fonction de transmission ou une moyenne.

**10.** Dispositif selon l'une des revendications 8 ou 9, N étant égal à 2, comportant des moyens pour :

- sélectionner une première zone d'énergie, appelée zone basse énergie, et une deuxième zone d'énergie, appelée zone haute énergie,
- calculer l'intégrale de la fonction de transmission, par rapport à l'énergie, et former au moins un premier coefficient ($\alpha 1$) de transmission et un deuxième coefficient ($\alpha 2$) de transmission.

**11.** Dispositif selon l'une des revendications 8 à 10, le détecteur étant (2) un détecteur CdTe ou CdMnTe, ou HgI2, ou AsGa, ou Si, ou T1Br.

**12.** Dispositif selon l'une des revendications 8 à 11, comportant en outre des moyens (12, 16) pour corriger les spectres des phénomènes d'empilement.

**13.** Dispositif selon la revendication 12, comportant :

- des moyens (12, 16) pour déterminer un spectre d'empilement (Emp), qui est la partie du spectre mesuré ($Sp_{mes}$), qui correspond uniquement aux seuls empilements,
- des moyens (12, 16) pour calculer au moins un premier spectre corrigé ($Sp_{cor}$), par différence entre le spectre mesuré ($Sp_{mes}$) et le spectre d' empilement (Emp).

**14.** Dispositif selon la revendication 13, le spectre d'empilement étant calculé à partir du spectre mesuré ($Sp_{mes}$) et des données de temps d'exposition ($T_{expo}$) et de temps mort ($T_{mort}$) du système, durée minimale, séparant deux photons, en-dessous de laquelle seul un photon sur les deux est détecté.

**15.** Dispositif selon l'une des revendications 8 à 14, comportant en outre un circuit (82, 83) apte à délivrer une impulsion en tension dont l'amplitude est proportionnelle à une charge détectée par le détecteur (2) et un convertisseur analogique/numérique (ADC) qui numérise l'impulsion en tension et délivre une impulsion numérique, **caractérisé en ce qu'**il comprend, en aval du convertisseur analogique/numérique (ADC), un circuit de traitement (85) qui comprend :

- une unité de lecture (86), à une fréquence de lecture $f_L$, des impulsions numériques délivrées par le convertisseur analogique/numérique (ADC),
- une unité de calcul (87) qui calcule une variation temporelle (S' (t)) des impulsions numériques lues, et
- un circuit (88, 89) apte à capturer les impulsions numériques lues dont la variation temporelle atteint un seuil prédéterminé (S1).

**Patentansprüche**

**1.** Verfahren zur Charakterisierung der Art eines Materials, umfassend :

- Anordnen wenigstens einer Probe bzw. eines Musters (100) dieses Materials zwischen einer Röntgenstrahlungsquelle (1) und einem (Detektor 2),
- Herstellen, mit Hilfe der Quelle (1), wenigstens eines Spektrums der durch das genannte Material hindurch transmittierten Röntgenstrahlung, jedes während wenigstens einer Dauer $\Delta t$,
- Berechnen der Transmissionsfunktion dieses Materials in Abhängigkeit von der Energie oder von dem Detektionskanal aufgrund wenigsten eines der genannten Spektren,
- Auswählen von N Energiebändern, wobei N höher oder gleich 2 ist,
- Bestimmen, in jedem der Energiebänder, eines einer statistischen Größe der Transmissionsfunktion in diesem Energieband entsprechenden Transmissionskoeffizienten $\alpha i$,
- Bestimmen der Art des genannten Materials mit Hilfe der genannten Koeffizienten durch Vergleichen der Transmissionskoeffizienten ($\alpha_1...\alpha_N$) mit Transmissions-Eichkoeffizienten ($\alpha_{Eichmaterial1}, ... \alpha_{EichmaterialN}$).

**2.** Verfahren nach Anspruch 1, wobei die statistische Größe ein Integral der Transmissionsfunktion ist oder ein Mittelwert.

**3.** Verfahren nach einem der Ansprüche 1 bis 2, wobei N gleich 2 ist und das Verfahren dabei umfasst:

- die Selektion einer ersten Energiezone, Niedrigenergiezone genannt, und einer zweiten Energiezone, Hochenergiezone genannt,
- die Berechnung des Integrals der Transmissionsfunktion in Bezug auf die Energie, um auf diese Weise wenigstens einen ersten Transmissionskoeffizienten ($\alpha1$) und einen zweiten Transmissionskoeffizienten ($\alpha2$) zu bilden.

**4.** Verfahren nach einem der Ansprüche 1 bis 3, wobei die Dauer $\Delta t$ zwischen 1 ms und 10 ms enthalten ist.

**5.** Verfahren nach einem der Ansprüche 1 bis 4, wobei die Bestimmung der Art des genannten Materials mit Hilfe der Transmissionskoeffizienten realisiert wird durch Positionierung der berechneten Koeffizienten in einer Koeffizienten von bekannten Materialien umfassenden Ebene in Abhängigkeit von ihrer Dicke.

**6.** Verfahren nach einem der Ansprüche 1 bis 5, wobei der Vergleich der Transmissionskoeffizienten ($\alpha_1...\alpha_N$) mit Transmissions-Eichkoeffizienten ($\alpha_{Eichmaterial1}, ... \alpha_{EichmaterialN}$) eine Messung des Abstands zwischen einem N-Bits-Byte ($\alpha_1, \alpha_2, ...\alpha_N$) und jedem Eich-N-Bits-Byte ($\alpha_{iEichmaterial}, ... \alpha_{NEichmaterial}$) von jedem Eichmaterial umfasst, wobei die Art und die Dicke des geprüften Materials dann der Art und der Dicke des durch das Eich-N-Bits-Byte repräsentierten Eichmaterials entspricht, dessen Koordinaten am nächsten sind.

**7.** Verfahren nach einem der Ansprüche 1 bis 6, außerdem einen Schritt zur Korrektur der Spektren wegen der Störungen umfassend, die aus den Stapelphänomenen resultieren.

**8.** Vorrichtung zur Charakterisierung der Art einer Materialprobe, umfassend :

- eine Röntgenstrahlungsquelle (1),

- einen Detektor (2),
- Einrichtungen (4, 6, 8, 10, 12, 20, 22, 52, 82, 83, 84, 85), um mit Hilfe der Röntgenstrahlungsquelle wenigstens ein Spektrum einer durch dieses Material hindurch transmittiertes Röntgenstrahlung zu realisieren, jedes während einer Dauer $\Delta t$,
- Einrichtungen (12, 16) zum Berechnen der Transmissionsfunktion dieses Materials in Abhängigkeit von der Energie oder von dem Detektionskanal,
- Einrichtungen zum Auswählen von N Energiebändern, wobei N höher oder gleich 2 ist,
- Einrichtungen (12, 16), um in jedem der Energiebänder wenigstens einen Transmissionskoeffizienten ($\alpha_1$) zu berechnen, wobei jeder Koeffizient einer statistischen Größe der Transmissionsfunktion in diesem Energieband entspricht,
- Einrichtungen (12, 16), um die Art des genannten Materials mit Hilfe der genannten Koeffizienten durch Vergleichen der Transmissionskoeffizienten ($\alpha_1...\alpha_N$) mit Transmissions-Eichkoeffizienten ($\alpha_{Eichmaterial1}, ... \alpha_{EichmaterialN}$) zu bestimmen.

9. Vorrichtung nach Anspruch 8, wobei die statistische Größe ein Integral der Transmissionsfunktion oder ein Mittelwert ist.

10. Vorrichtung nach einem der Ansprüche 8 oder 9, wobei N gleich 2 ist, umfassend Einrichtungen :

- zur Selektion einer ersten Energiezone, Niedrigenergiezone genannt, und einer zweiten Energiezone, Hochenergiezone genannt,
- zur Berechnung des Integrals der Transmissionsfunktion in Bezug auf die Energie, und Bilden wenigstens eines ersten Transmissionskoeffizienten ($\alpha1$) und eines zweiten Transmissionskoeffizienten ($\alpha2$).

11. Vorrichtung nach einem der Ansprüche 8 bis 10, wobei der Detektor (2) ein Detektor des Typs CdTe oder CdMnTe, oder Hgl2, oder AsGa, oder Si, oder TlBr ist.

12. Vorrichtung nach einem der Ansprüche 8 bis 11, außerdem Einrichtungen (12, 16) zum Korrigieren der Spektren der Stapelphänomene umfassend.

13. Vorrichtung nach Anspruch 12, umfassend :

- Einrichtungen (12, 16) zum Bestimmen eines Stapelspektrums (Emp), das der Teil des gemessenen Spektrums (Sp$_{mes}$) ist, der nur allein den Stapeln entspricht,
- Einrichtungen (12, 16) zum Berechnen wenigstens eines ersten korrigierten Spektrums (Sp$_{cor}$) aufgrund der Differenz zwischen dem gemessenen Spektrum (Sp$_{mes}$) und dem Stapelspektrum (Emp).

14. Vorrichtung nach Anspruch 13, wobei das Stapelspektrum berechnet wird aufgrund des gemessenen Spektrums (Sp$_{mes}$) und der Belichtungszeit- und Totzeitdaten (T$_{expo}$), (T$_{mort}$) des Systems von minimaler, zwei Photonen trennender Dauer, unterhalb der nur eines der beiden detektiert wird.

15. Vorrichtung nach einem der Ansprüche 8 bis 14, außerdem eine Schaltung (82, 83) umfassend, fähig einen Spannungsimpuls zu liefern, dessen Größe proportional ist zu einer durch den Detektor (2) detektierten Ladung, und einen Analog-Digital-Wandler (ADC), der den Spannungsimpuls digitalisiert und einen digitalen Impuls liefert, **dadurch gekennzeichnet, dass** sie eine dem Analog-Digital-Wandler (ADC) nachgeschaltete Verarbeitungsschaltung (85) aufweist, die umfasst :

- eine Leseeinheit (86) mit einer Lesefrequenz f$_L$ der durch den Analog-Digital-Wandler (ADC) gelieferten Impulse,
- eine Recheneinheit (87), die eine zeitliche Abweichung (S'(t)) der gelesenen Impulse berechnet, und
- eine Schaltung (88, 89), fähig die gelesenen digitalen Impulse zu fangen, deren zeitliche Abweichung einen vorher festgelegten Schwellenwert (S1) erreicht.

**Claims**

1. Method for characterising the nature of a material, consisting of the following steps:

- provide at least one sample (100) of this material between an X-ray source (1) and a detector (2),
- use the X-ray source (1) to make at least one X-radiation spectrum transmitted through said material, each for a time $\Delta t$,
- calculate the transmission function of this material as a function of the energy or the detection channel, using at least one of said spectra,
- select N energy bands of said function, N being greater than or equal to 2,
- in each energy band, determine a transmission coefficient $\alpha i$ corresponding to a statistical magnitude of the transmission function in this energy band,
- determine the nature of said material using said coefficients, by comparing transmission coefficients $(\alpha_1...\alpha_N)$ with standard transmission coefficients $(\alpha_{standardmaterial1}, ...\alpha_{standardmaterialN})$.

2. Method according to claim 1, the statistical magnitude being an integral of the transmission function or an average.

3. Method according to one of claims 1 or 2, N being equal to 2, the method then comprising:

   - selection of a first energy zone called the low energy zone, and a second energy zone called the high energy zone,
   - calculation of the integral of the transmission function with respect to energy, thus forming at least a first transmission coefficient $(\alpha_1)$ and a second transmission coefficient $(\alpha 2)$.

4. Method according to one of claims 1 to 3, the time $\Delta t$ being between 1 ms and 10 ms.

5. Method according to one of claims 1 to 4, the nature of said material being determined using transmission coefficients by positioning calculated coefficients in a plane comprising known material coefficients as a function of their thickness.

6. Method according to one of claims 1 to 5, the comparison between transmission coefficients $(\alpha_1...\alpha_N)$ and standard transmission coefficients $(\alpha_{istandardmaterial1}, ...\alpha_{NstandardmaterialN})$ Comprising a measurement of the distance between a set of N transmission coefficients $(\alpha 1, \alpha 2, ..\alpha N)$ and each standard set of N transmission coefficients $(\alpha_{istandardmaterial}, ...\alpha_{Nstandardmaterial})$ of each Standard material, the nature and thickness of the examined material then corresponding to the nature and thickness of the standard material represented by the standard set of N transmission coefficients with the closest coordinates.

7. Method according to one of claims 1 to 6, also comprising a spectrum correction step for disturbances resulting from stacking phenomena.

8. Device for characterising the nature of a sample of material, comprising:

   - an X-ray source (1),
   - a detector (2),
   - means (4, 6, 8, 10, 12, 20, 22, 52, 82, 83, 84, 85) of using the X-ray source to make at least one X-radiation spectrum transmitted through this material, each for a time $\Delta t$,
   - means (12, 16) of calculating the transmission function of this material as a function of the energy or the detection channel,
   - means of selecting N energy bands of said function, N being greater than or equal to 2,
   - means (12, 16) of calculating at least one transmission coefficient $(\alpha_1)$ in each energy band, each coefficient being a statistical magnitude of the transmission function in this energy band,
   - means (12, 16) of determining the nature of said material using said coefficients, by comparing transmission coefficients $(\alpha_1...\alpha_N)$ with standard transmission coefficients $(\alpha_{standardmaterial1}, ...\alpha_{standardmaterialN})$.

9. Device according to claim 8, the statistical magnitude being an integral of the transmission function or an average.

10. Device according to one of claims 8 or 9, N being equal to 2, comprising means to:

    - select a first energy zone called the low energy zone, and a second energy zone called the high energy zone,
    - calculate the integral of the transmission function with respect to energy, and to form at least a first transmission coefficient $(\alpha 1)$ and a second transmission coefficient $(\alpha 2)$.

11. Device according to one of claims 8 to 10, the detector (2) being a CdTe or CdMnTe, or HgI2, or AsGa, or Si, or TlBr detector.

**12.** Device according to one of claims 8 to 11, also comprising means (12, 16) to correct stacking phenomenon spectra.

**13.** Device according to claim 12, comprising:

- means (12, 16) of determining a stacked spectrum (Emp), that is the part of the measured spectrum ($Sp_{mes}$), that corresponds to stacks alone,
- means (12, 16) of calculating at least one first corrected spectrum ($Sp_{ear}$), by taking the difference between the measured spectrum ($Sp_{mes}$) and the stacked spectrum (Emp).

**14.** Device according to claim 13, the stacked spectrum being calculated using the measured spectrum ($Sp_{mes}$) and exposure time ($T_{expo}$) and dead time ($T_{dead}$) data for the system, the minimum time separating two photons below which only one of the two photons is detected.

**15.** Device according to one of claims 8 to 14, also comprising a circuit (82, 83) capable of outputting a voltage pulse for which the amplitude is proportional to a charge detected by the detector (2) and an analogue/digital converter (ADC) that digitises the voltage pulse and outputs a digital pulse, **characterised in that** it includes a processing circuit (85) on the output side of the analogue/digital converter (ADC), comprising:

- a unit (86), to read digital pulses output by the analogue/digital converter (ADC), at a read frequency $f_L$,
- a calculation unit (87) that calculates a time variation (S'(t)) of digital pulses read, and
- a circuit (88, 89) capable of capturing digital pulses for which the time variation reaches a predetermined threshold (S1).

## FIG.1A

## FIG.1B

FIG.2

FIG.3

FIG.4

FIG.5A

FIG.5B

FIG.6

FIG.7

FIG.8

— Energie mesuré pour le photon de plus haute énergie

--- Energie mesuré pour le photon de plus basse énergie

## FIG.9

## FIG.10

FIG.11

FIG.12

FIG.13

FIG.14A

FIG.14B

FIG. 15

FIG.16

FIG.17

FIG. 18

FIG.19

## FIG. 20

## FIG. 21

FIG.22A

FIG.22B

FIG.23A

FIG.23B

EP 2 510 338 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6018562 A
- FR 2870603
- EP 2071722 A
- FR 0956844
- FR 0958506

**Littérature non-brevet citée dans la description**

- American National Standard for Calibration and Use of Germanium Spectrometers for the Measurement of Gamma-Ray Emission Rates of Radionuclides. American National Standards Institute, 7, , 13, , 15, , 86, , 89, , 134
- **TRIGANO, T.** *Traitement du signal spectrométrique : Etude du désempilement de spectre en énergie pour la spectrométrie gamma,* 2006